(19) Europäisches Patentamt
European Patent Office
Office européen des brevets

(11) EP 4 556 510 A1

(12) **EUROPEAN PATENT APPLICATION**
published in accordance with Art. 153(4) EPC

(43) Date of publication:
**21.05.2025 Bulletin 2025/21**

(21) Application number: **23839454.8**

(22) Date of filing: **27.06.2023**

(51) International Patent Classification (IPC):
***C08G 83/00*** (2006.01) ***C08G 61/02*** (2006.01)
***C08J 5/22*** (2006.01) ***H01B 1/06*** (2006.01)
***H01M 4/86*** (2006.01) ***H01M 8/10*** (2016.01)
***H01M 8/102*** (2016.01) ***H01M 8/1039*** (2016.01)

(52) Cooperative Patent Classification (CPC):
**C08G 61/02; C08G 83/00; C08J 5/22; H01B 1/06; H01M 4/86; H01M 8/10; H01M 8/102; H01M 8/1039;** Y02E 60/50

(86) International application number:
**PCT/JP2023/023786**

(87) International publication number:
**WO 2024/014280 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.07.2022 JP 2022113963**

(71) Applicants:
- **University of Yamanashi**
**Kofu-shi, Yamanashi 400-8510 (JP)**
- **Takahata Precision Co., Ltd.**
**Tokyo 160-0023 (JP)**

(72) Inventors:
- **MIYATAKE, Kenji**
**Kofu-shi, Yamanashi 400-8510 (JP)**
- **YOKOTA, Naoki**
**Tokyo 160-0023 (JP)**
- **TAKAHASHI, Yuko**
**Tokyo 160-0023 (JP)**

(74) Representative: **Plougmann Vingtoft a/s**
**Strandvejen 70**
**2900 Hellerup (DK)**

(54) **ANION EXCHANGE RESIN, ELECTROLYTE MEMBRANE, BINDER FOR FORMING ELECTRODE CATALYST LAYER, AND BATTERY ELECTRODE CATALYST LAYER**

(57) Provided are an anion exchange resin being capable of producing an electrolyte membrane, a binder for forming an electrode catalyst layer, and a battery electrode catalyst layer, which has excellent electrical properties (anion conductivity) and chemical properties (gas permeability and water uptake property), an electrolyte membrane and a binder for forming an electrode catalyst layer formed from the anion exchange resin, and a battery electrode catalyst layer formed from the binder for forming an electrode catalyst layer.

For example, used is an anion exchange resin in which a hydrophobic unit being composed of divalent hydrophobic groups including a bisphenol residue having an alicyclic structure, which are repeated via carbon-carbon bond, a hydrophobic unit being composed of hydrophobic groups of a plurality of aromatic rings bonded to each other via a divalent fluorine-containing hydrocarbon group, which are repeated via carbon-carbon bond, and a hydrophilic unit having a fluorene ring bonded to an anion exchange group-containing group are bonded via carbon-carbon bond.

FIG. 1

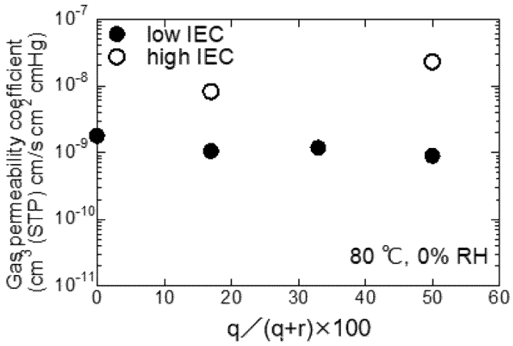


Fig.1

EP 4 556 510 A1

## Description

TECHNICAL FIELD

This invention relates to an anion exchange resin, an electrolyte membrane, a binder for forming an electrode catalyst layer, and a battery electrode catalyst layer.

BACKGROUND ART

An anion exchange resin, comprising: a divalent hydrophobic group being composed of a singular aromatic ring, or being composed of a plurality of aromatic rings which are bonded to each other via a divalent hydrocarbon group, a divalent silicon-containing group, a divalent nitrogen-containing group, a divalent phosphorus-containing group, a divalent oxygen-containing group, a divalent sulfur-containing group, or carbon-carbon bond; and a divalent hydrophilic group being composed of a singular polycyclic compound, or being composed of a plurality of polycyclic compounds which are bonded to each other via a linking group and/or carbon-carbon bond, wherein the linking group is a divalent hydrocarbon group, a divalent silicon-containing group, a divalent nitrogen-containing group, a divalent phosphorus-containing group, a divalent oxygen-containing group, or a divalent sulfur-containing group, and at least one of the linking group or the polycyclic compound is bonded to an anion exchange group via a divalent saturated hydrocarbon group having a carbon number of 2 or more; wherein the anion exchange resin comprises: a hydrophobic unit being composed of the hydrophobic group alone, or being composed of a plurality of hydrophobic groups repeated via ether bond, thioether bond, or carbon-carbon bond; and a hydrophilic unit being composed of the hydrophilic group alone, or being composed of a plurality of hydrophilic groups repeated via ether bond, thioether bond, or carbon-carbon bond; and wherein the hydrophobic unit and the hydrophilic unit are bonded via ether bond, thioether bond, or carbon-carbon bond is known (Patent Document 1)..

PRIOR ART DOCUMENT

PATENT DOCUMENT

Patent Document 1: JP 2019-23258 A

SUMMARY OF THE INVENTION

PROBLEM TO BE SOLVED BY THE INVENTION

Although the anion exchange resin described in Patent Document 1 has successfully improved chemical properties (durability) and mechanical properties (flexibility of the thin film), it is desired to further improve electrical properties (anion conductivity) and chemical properties (gas permeability and water uptake property). In particular, since binders for forming an electrode catalyst layer are required to adjust and control gas diffusivity, it is desired to further improve gas permeability, considering the use of the anion exchange resin described in Patent Document 1 as a binder for forming an electrode catalyst layer.

Accordingly, an object of the present invention is to provide an anion exchange resin being capable of producing an electrolyte membrane, a binder for forming an electrode catalyst layer, and a battery electrode catalyst layer, which have excellent electrical properties (anion conductivity) and chemical properties (gas permeability and water uptake property); an electrolyte membrane and a binder for forming an electrode catalyst layer formed from the anion exchange resin, and a battery electrode catalyst layer formed from the binder for forming the electrode catalyst layer.

MEANS OF SOLVING THE PROBLEM

In order to solve the aforementioned problems, an anion exchange resin of the present invention comprises:

a divalent hydrophobic group (a) comprising a bisphenol residue represented by following formula (1);
a divalent hydrophobic group (b) being composed of a singular aromatic ring, or being composed of a plurality of aromatic rings which are bonded to each other via a divalent hydrocarbon group, a divalent silicon-containing group, a divalent nitrogen-containing group, a divalent phosphorus-containing group, a divalent oxygen-containing group, a divalent sulfur-containing group, or carbon-carbon bond; and
a divalent hydrophilic group being composed of a singular aromatic ring, or being composed of a plurality of aromatic rings which are bonded to each other via a linking group and/or carbon-carbon bond, wherein the linking group is a divalent hydrocarbon group, a divalent silicon-containing group, a divalent nitrogen-containing group, a divalent

phosphorus-containing group, a divalent oxygen-containing group, or a divalent sulfur-containing group, and at least one of the linking group or the aromatic ring is bonded to an anion exchange group via a divalent saturated hydrocarbon group having a carbon number of 2 or more;
wherein the anion exchange resin comprises:

a hydrophobic unit (a) being composed of the hydrophobic group (a) alone, or being composed of a plurality of the hydrophobic groups (a) repeated via ether bond, thioether bond, or carbon-carbon bond;
a hydrophobic unit (b) being composed of the hydrophobic group (b) alone, or being composed of a plurality of the hydrophobic groups (b) repeated via ether bond, thioether bond, or carbon-carbon bond; and
a hydrophilic unit being composed of the hydrophilic group alone, or being composed of a plurality of the hydrophilic groups repeated via ether bond, thioether bond, or carbon-carbon bond; and
wherein the hydrophobic unit (a), the hydrophobic unit (b), and the hydrophilic unit are bonded via ether bond, thioether bond, or carbon-carbon bond.

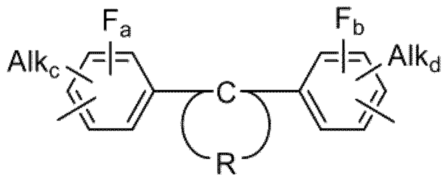
(1)

(In the formula, Alk are same or different from each other and represent an alkyl group or an aryl group; R represents a divalent hydrocarbon group forming an alicyclic structure; and a, b, c, and d are same or different from each other and represent an integer of 0 to 4.)

In the anion exchange resin of the present invention, it is suitable that the hydrophobic group (a) comprises a bisphenol residue represented by following formula (1').

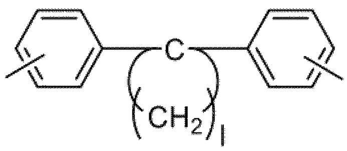
(1')

(In the formula, l represents an integer of 2 or more.)
In the anion exchange resin of the present invention, it is suitable that the hydrophobic group (b) comprises a bisphenol residue represented by following formula (2).

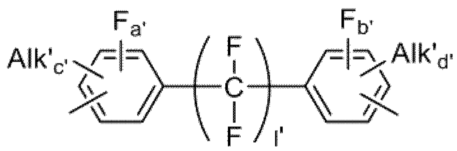
(2)

(In the formula, Alk' are same or different from each other and represent an alkyl group or an aryl group; a', b', c', and d' are same or different from each other and represent an integer of 0 to 4; and l' represents an integer of 1 or more.)
In the anion exchange resin of the present invention, it is suitable that the hydrophobic group (b) comprises a bisphenol residue represented by following formula (2').

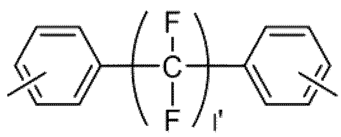
(2')

(In the formula, l' represents an integer of 1 or more.)
In the anion exchange resin of the present invention, it is suitable that the hydrophobic group (b) comprises a bisphenol residue represented by following formula (3).

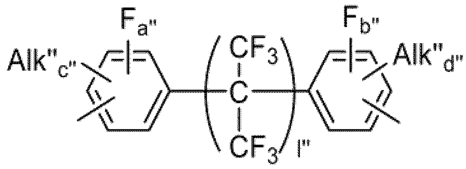

(3)

(In the formula, Alk" are same or different from each other and represent an alkyl group or an aryl group; a", b", c", and d" are same or different from each other and represent an integer of 0 to 4; and l" represents an integer of 1 or more.)

In the anion exchange resin of the present invention, it is suitable that the hydrophobic group (b) comprises a bisphenol residue represented by following formula (3').

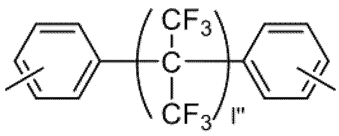

(3')

(In the formula, l" represents an integer of 1 or more.)

**In** the anion exchange resin of the present invention, it is suitable that the hydrophilic group is composed of a singular polycyclic compound, or is composed of a plurality of polycyclic compounds which are bonded to each other via a linking group and/or carbon-carbon bond, wherein the linking group is a divalent hydrocarbon group, a divalent silicon-containing group, a divalent nitrogen-containing group, a divalent phosphorus-containing group, a divalent oxygen-containing group, or a divalent sulfur-containing group, and at least one of the linking group or the polycyclic compound is bonded to an anion exchange group via a divalent saturated hydrocarbon group having a carbon number of 2 or more.

In the anion exchange resin of the present invention, it is suitable that the hydrophilic group is a fluorene residue represented by following formula (4).

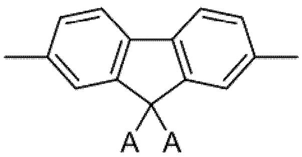

(4)

(In the formula, A are same or different from each other and represent an anion exchange group-containing group or an anion exchange group-containing cyclic structure.)

In order to solve the aforementioned problem, an electrolyte membrane of the present invention comprises an anion exchange resin described above.

In order to solve the aforementioned problem, a binder for forming an electrocatalyst layer of the present invention comprises an anion exchange resin described above.

In order to solve the aforementioned problem, a battery electrocatalyst layer of the present invention comprises a binder for forming an electrode catalyst layer described above.

## EFFECT OF THE INVENTION

The present invention can provide an anion exchange resin being capable of producing an electrolyte membrane, a binder for forming an electrode catalyst layer, and a battery electrode catalyst layer, which have excellent electrical properties (anion conductivity) and chemical properties (gas permeability and water uptake property); an electrolyte membrane and a binder for forming an electrode catalyst layer formed from the anion exchange resin, and a battery electrode catalyst layer formed from the binder for forming the electrode catalyst layer.

## BRIEF DESCRIPTION OF DRAWINGS

FIG. 1 is a graph showing the results of hydrogen gas permeability for the samples obtained in the Examples and the Comparative Examples.

FIG. 2 is a graph showing the results of oxygen gas permeability for the samples obtained in the Examples and the Comparative Examples.

FIG. 3 is a graph showing the results of anion conductivity for the samples obtained in the Examples and the Comparative Examples.

FIG. 4 is a graph showing the results of water uptake for the samples obtained in the Examples and the Comparative Examples.

MODE FOR CARRYING OUT THE INVENTION

An anion exchange resin of the present invention is composed of a divalent hydrophobic group (a), a divalent hydrophobic group (b), and a divalent hydrophilic group.

In an anion exchange resin of the present invention, examples of the divalent hydrophobic group (a) include those containing bisphenol residues represented by the following formula (1).

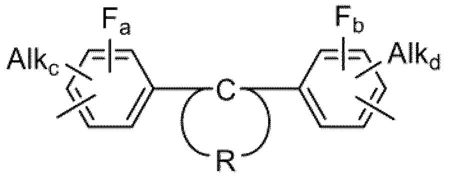 (1)

(In the formula, Alk are the same or different from each other and represent an alkyl group or an aryl group; R represents a divalent hydrocarbon group forming an alicyclic structure; and a, b, c, and d are the same or different from each other and represent an integer of 0 to 4.)

In the above formula (1), Alk are the same or different from each other and represent an alkyl group or an aryl group. Examples of the alkyl group include, for example, alkyl groups having a carbon number of 1 to 20 such as methyl group, ethyl group, propyl group, i-propyl group, butyl group, i-butyl group, sec-butyl group, t-butyl group, pentyl group, hexyl group, heptyl group, and octyl group; and cycloalkyl groups having a carbon number of 1 to 20 such as cyclopropyl group, cyclobutyl group, cyclopentyl group, cyclohexyl group, cycloheptyl group, and cyclooctyl group. Examples of the aryl group include, for example, phenyl group, biphenyl group, naphthyl group, and fluorenyl group.

In the above formula (1), R represents a divalent hydrocarbon group forming an alicyclic structure. Examples of the alicyclic structure include monocyclic cycloalkane structures such as cyclopropane, cyclobutane, cyclopentane, cyclohexane, cycloheptane, cyclooctane, cyclononane, cyclodecane, cycloundecane, cyclododecane, cyclotridecane, cyclotetradecane, cyclopentadecane, cyclohexadecane, cycloheptadecane, cyclooctadecane, cyclononadecane, and cycloicosane; monocyclic cycloalkene structures such as cyclopropene, cyclobutene, cyclopropene, cyclohexene, cycloheptene, and cyclooctene; polycyclic cycloalkane structures such as decahydronaphthalene, norbornane, cubane, adamantane, and dodecahedrane; polycyclic cycloalkene structures such as norbornene; spirocyclic structures such as spiro[3.4]octane, spiro[4.5]decane, and spiro[5.5]undecane; cyclic structures having one heteroatom such as pyrrolidine, piperidine, tetrahydrofuran, tetrahydropyran, phosphorane, phosphinane, tetrahydrothiophene, and thiane; cyclic structures having two heteroatoms such as imidazolidine, pyrazolidine, oxazolidine, isoxazolidine, thiazolidine, isothiazolidine, dioxolane, dithiolane, piperazine, morpholine, thiomorpholine, dioxane, and dithiane; cyclic structures having three heteroatoms such as hexahydro-1,3,5-triazine, trioxane, and trithiane; and cyclic structures by combining these.

The alicyclic structure described above may be substituted with an alkyl group, an aryl group, a halogen atom, or the like. Examples of the alkyl group include alkyl groups described above. Examples of the aryl group include aryl groups described above. Examples of the halogen atom include fluorine atom, chlorine atom, bromine atom, and iodine atom. In the case where the alicyclic structure is substituted with an alkyl group or an aryl group, the substituted number and the substituted position of the alkyl group or the aryl group are appropriately set according to the purpose and the application.

In the above formula (1), a and b are the same or different from each other and represent an integer of 0 to 4, and preferably an integer of 0 to 2. Further preferably, both a and b represent 0.

In the above formula (1), c and d are the same or different from each other and represent an integer of 0 to 4, and preferably an integer of 0 to 2. Further preferably, both c and d represent 0.

Examples of such hydrophobic group (a) include, for example, following structures.

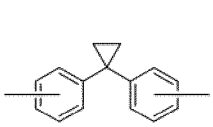 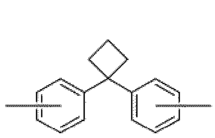 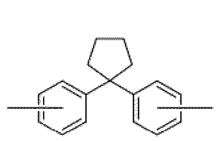 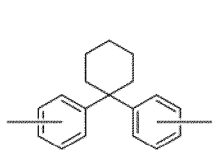

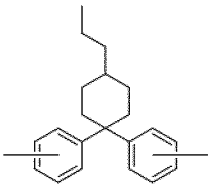
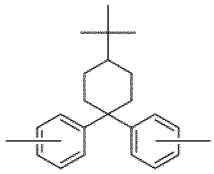
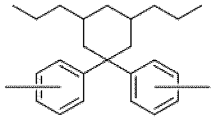
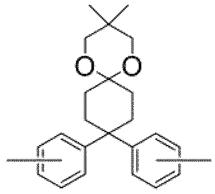

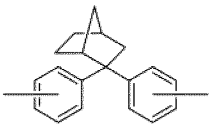
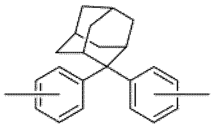
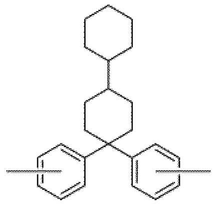
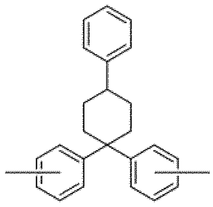

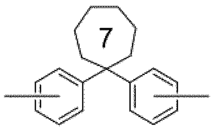
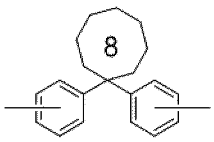
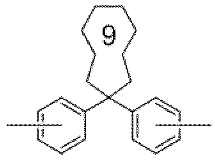
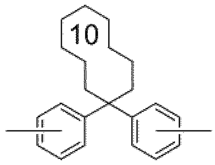

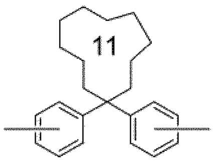
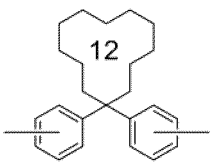
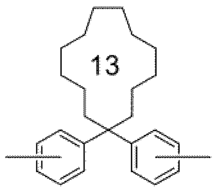
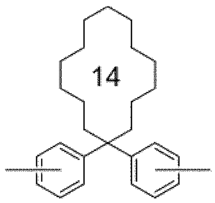

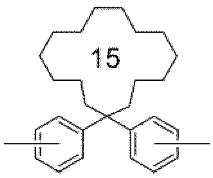
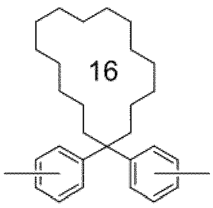
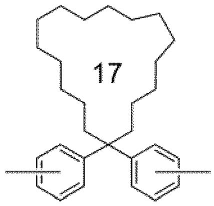
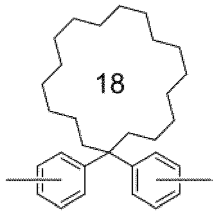

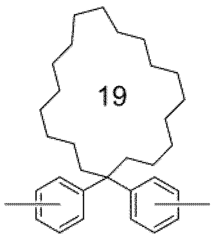
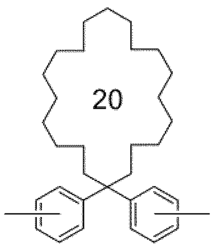

Preferred examples of such hydrophobic group (a) include bisphenol residues represented by the following formula (1').

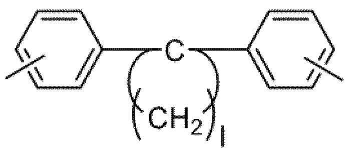

(1')

(In the formula, l represents an integer of 2 or more.)

In the above formula (1'), l represents an integer of 2 or more, represents preferably an integer of 3 to 20, and represents more preferably an integer of 5 to 8.

In an anion exchange resin of the present invention, examples of the divalent hydrophobic group (b) include those composed of a singular aromatic ring and those composed of a plurality of (2 or more, preferably 2) aromatic rings which are bonded to each other via a divalent hydrocarbon group, a divalent silicon-containing group, a divalent nitrogen-containing group, a divalent phosphorus-containing group, a divalent oxygen-containing group, a divalent sulfur-containing group, or carbon-carbon bond.

Examples of the aromatic ring include, for example: monocyclic or polycyclic compounds having a carbon number of 6 to 14 such as benzene ring, naphthalene ring, indene ring, azulene ring, fluorene ring, anthracene ring, and phenanthrene ring; and heterocyclic compounds such as azole, oxol, thiophene, oxazole, thiazole, and pyridine.

Preferred examples of the aromatic ring include monocyclic aromatic hydrocarbons having a carbon number of 6 to 14, and more preferred examples include benzene ring.

The aromatic ring may be substituted with a substituent such as a halogen atom, an alkyl group, an aryl group, or a pseudohalide, if needed. Examples of the halogen atom include fluorine atom, chlorine atom, bromine atom, and iodine atom. Examples of the pseudohalide include trifluoromethyl group, -CN, -NC, -OCN, -NCO, -ONC, - SCN, -NCS, -SeCN, -NCSe, -TeCN, -NCTe, and $-N_3$. Examples of the alkyl group include alkyl groups described above. Examples of the aryl group include aryl groups described above.

In the case where the aromatic ring is substituted with a substituent such as a halogen atom, an alkyl group, an aryl group, or a pseudohalide, the substituted number and the substituted position of the substituent such as a halogen atom, an alkyl group, an aryl group, or a pseudohalide are appropriately set according to the purpose and the application.

More specifically, examples of the aromatic ring substituted with a halogen atom include, for example, benzene ring substituted with one to four halogen atoms (e.g., benzene ring substituted with one to four fluorine atoms, benzene ring substituted with one to four chlorine atoms, benzene ring substituted with one to four bromine atoms, and benzene ring substituted with one to four iodine atoms, in which one to four halogen atoms may be all the same or different).

Examples of the divalent hydrocarbon group include, for example, divalent saturated hydrocarbon groups having a carbon number of 1 to 20 such as methylene ($-CH_2-$), ethylene, propylene, i-propylene ($-C(CH_3)_2-$), butylene, i-butylene, sec-butylene, pentylene (pentene), i-pentylene, sec-pentylene, hexylene (hexamethylene), 3-methylpentene, heptylene, octylene, 2-ethylhexylene, nonylene, decylene, i-decylene, dodecylene, tetradecylene, hexadecylene, and octadecylene.

Preferred examples of the divalent hydrocarbon group include saturated divalent hydrocarbon group having a carbon number of 1 to 3, specifically such as methylene ($-CH_2-$), ethylene, propylene, i-propylene ($-C(CH_3)_2-$), more preferred examples include methylene ($-CH_2-$) and isopropylene ($-C(CH_3)_2-$), and particularly preferred examples include i-propylene ($-C(CH_3)_2-$).

The divalent hydrocarbon group may be substituted with a monovalent residue in the aromatic ring described above.

Preferred examples of such hydrophobic group (b) include bisphenol residues represented by the following formula (2) and bisphenol residues represented by the following formula (3).

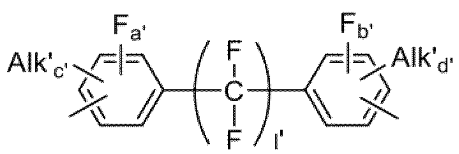

(2)

(In the formula, Alk' are the same or different from each other and represent an alkyl group or an aryl group; a', b', c', and d' are the same or different from each other and represent an integer of 0 to 4; and l' represents an integer of 1 or more.)

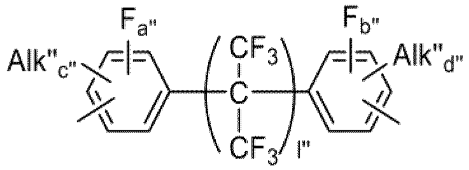

(3)

(In the formula, Alk" are the same or different from each other and represent an alkyl group or an aryl group; a", b", c", and d" are the same or different from each other and represent an integer of 0 to 4; and l" represents an integer of 1 or more.)

In the above formula (2), Alk' are the same or different from each other and represent an alkyl group or an aryl group. Examples of the alkyl group include alkyl groups described above. Examples of the aryl group include aryl groups described above.

In the above formula (2), a' and b' are the same or different from each other and represent an integer of 0 to 4, and

preferably an integer of 0 to 2. Further preferably, both a' and b' represent 0.

In the above formula (2), c' and d' are the same or different from each other and represent an integer of 0 to 4, and preferably an integer of 0 to 2. Further preferably, both c' and d' represent 0.

In the above formula (2), l' represents an integer of 1 or more, represents preferably an integer of 1 to 20, and represents more preferably an integer of 2 to 6.

In the above formula (3), Alk" are the same or different from each other and represent an alkyl group or an aryl group. Examples of the alkyl group include alkyl groups described above. Examples of the aryl group include aryl groups described above.

In the above formula (3), a" and b" are the same or different from each other and represent an integer of 0 to 4, and preferably an integer of 0 to 2. Further preferably, both a" and b" represent 0.

In the above formula (2), c" and d" are the same or different from each other and represent an integer of 0 to 4, and preferably an integer of 0 to 2. Further preferably, both c" and d" represent 0.

In the above formula (2), l" represents an integer of 1 or more, represents preferably an integer of 1 to 20, and represents more preferably an integer of 2 to 6.

Particularly preferred examples of such hydrophobic group (b) include bisphenol residues represented by the following formula (2') and bisphenol residues represented by the following formula (3').

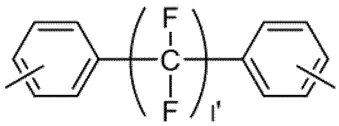

(2')

(In the formula, l' represents an integer of 1 or more.)

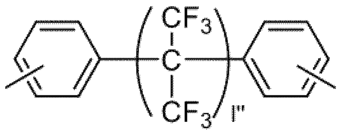

(3')

(In the formula, l" represents an integer of 1 or more.)

In the above formula (2'), l' has the same meaning as l' in the above formula (2) and represents an integer of 1 or more, represents preferably an integer of 1 to 20, and represents more preferably an integer of 2 to 6.

In the above formula (3'), l" has the same meaning as l" in the above formula (3) and represents an integer of 1 or more, represents preferably an integer of 1 to 20, and represents more preferably an integer of 2 to 6.

Thus, by introducing a divalent fluorine-containing group into the main chain of the hydrophobic group constituting a hydrophobic unit, the following effects can be obtained.

- The solubility and flexibility are improved by the main chain having low intermolecular interaction.
- The water repellency is provided, and ion conductive paths can be formed by growing phase separation with a hydrophilic moiety (near the ion exchange group).
- The water repellency prevents a hydrophilic hydroxide ion and an oxidant from accessing the main chain (providing improved alkali resistance and chemical stability).
- The rigidity of the main chain can be adjusted and controlled (providing improved flexibility of the electrolyte membrane).
- It can adhere to the catalyst layer due to its low glass transition temperature (providing decreased contact resistance).
- The gas diffusion capability can be adjusted and controlled (providing increased oxygen diffusion capability when used as a binder).

In an anion exchange resin of the present invention, examples of the divalent hydrophilic group include those composed of a singular aromatic ring and those composed of a plurality of (2 or more, preferably 2) aromatic rings which are bonded to each other via a linking group and/or carbon-carbon bond, in which the linking group is a divalent hydrocarbon group, a divalent silicon-containing group, a divalent nitrogen-containing group, a divalent phosphorus-containing group, a divalent oxygen-containing group, or a divalent sulfur-containing group, and at least one of the linking group or the aromatic ring is bonded to an anion exchange group via a divalent saturated hydrocarbon group having a carbon number of 2 or more. Hereinafter, an anion exchange group bonded to a divalent saturated hydrocarbon group having a carbon number of 2 or more may be referred to as an anion exchange group-containing group.

The aromatic ring may be a monocyclic compound (benzene ring) or a polycyclic compound. Examples of the

polycyclic compound include, for example, naphthalene ring, indene ring, azulene ring, fluorene ring, anthracene ring, phenanthrene ring, carbazole ring, and indole ring. Preferred examples include fluorene ring.

Examples of the divalent hydrocarbon group include divalent hydrocarbon groups described above.

The anion exchange group is introduced into the side chain of the hydrophilic group. Specifically, the anion exchange group is not particularly limited, and any known anion exchange groups such as quaternary ammonium groups, tertiary amino groups, secondary amino groups, primary amino groups, phosphine, phosphazene, tertiary sulfonium groups, quaternary boronium groups, quaternary phosphonium groups, and guanidium groups can be adopted as the anion exchange group. From the viewpoint of the ease of synthesis and the anion conductivity, preferred examples of the anion exchange group include quaternary ammonium groups.

Preferred examples of the anion exchange group include $-N^{+}(CH_3)_3$. Other examples of the anion exchange group include groups having the following structures. In the following structural formulae, * represents a moiety bonded to the aromatic ring having a substituent group.

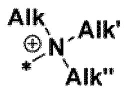
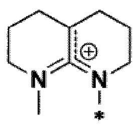
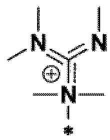

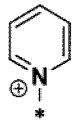
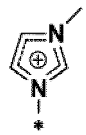
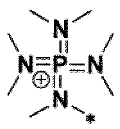
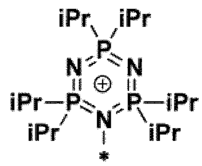

(In the figure, Alk, Alk', and Alk" represent an alkyl group described above, and iPr represents i-propyl group.)

Such anion exchange group is bonded to a linking group or an aromatic ring of a divalent hydrophilic residue via a divalent saturated hydrocarbon group, in which the divalent hydrophilic residue is composed of a plurality of aromatic rings which are bonded to each other via a linking group and/or direct bond, and in which the linking group is a divalent hydrocarbon group, a divalent silicon-containing group, a divalent nitrogen-containing group, a divalent phosphorus-containing group, a divalent oxygen-containing group, or a divalent sulfur-containing group.

The anion exchange group need only be bonded to at least one of the linking group or the aromatic rings. The anion exchange group may be bonded to a plurality of linking groups or aromatic rings, and may be bonded to all linking groups or aromatic rings. A plurality of anion exchange groups may be bonded to one linking group or aromatic ring.

The carbon number of the divalent saturated hydrocarbon group for bonding the anion exchange group to the linking group or the aromatic ring of the divalent hydrophilic residue is preferably 2 or more, in which the divalent hydrophilic residue is composed of a plurality of aromatic rings which are bonded to each other via the linking group and/or direct bond, and in which the linking group is a divalent hydrocarbon group, a divalent silicon-containing group, a divalent nitrogen-containing group, a divalent phosphorus-containing group, a divalent oxygen-containing group, or a divalent sulfur-containing group. The carbon number of the divalent saturated hydrocarbon group is preferably an integer of 2 to 20, more preferably an integer of 3 to 10, and further preferably an integer of 4 to 8.

Preferred examples of the divalent saturated hydrocarbon group include linear saturated hydrocarbon groups such as methylene ($-(CH_2)-$), ethylene ($-(CH_2)_2-$), trimethylene ($-(CH_2)_3-$), tetramethylene ($-(CH_2)_4-$), pentamethylene ($-(CH_2)_5-$), hexamethylene ($-(CH_2)_6-$), heptamethylene ($-(CH_2)_7-$), and octamethylene ($-(CH_2)_8-$).

Preferred examples of the hydrophilic group having such structure include those having a structure represented by the following formulae.

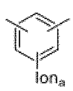
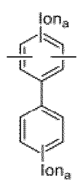
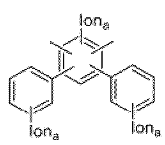
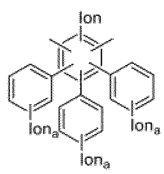
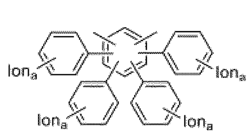
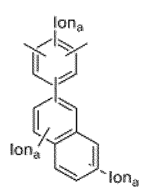

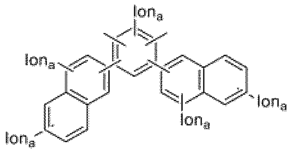
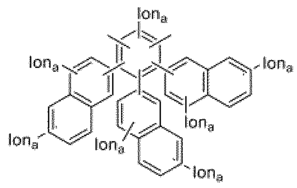
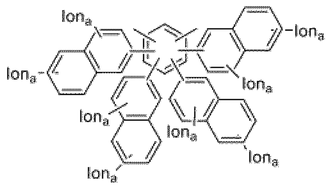
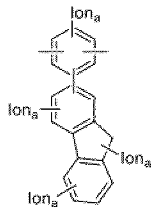

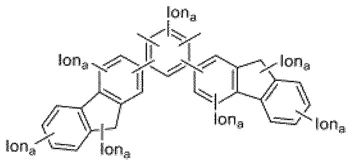
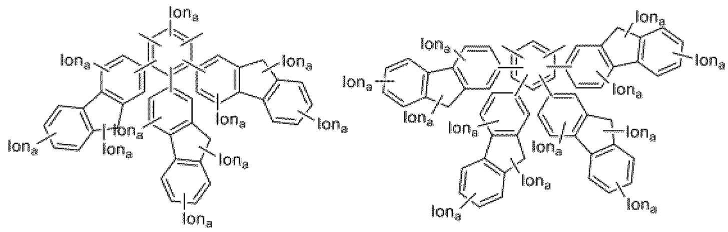

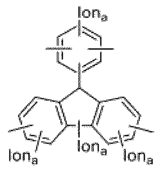
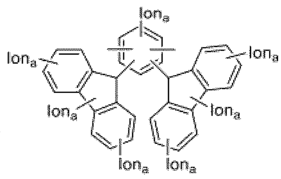
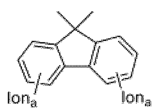
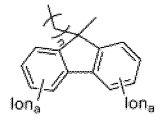
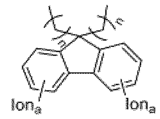

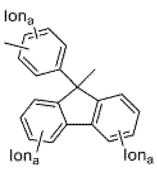
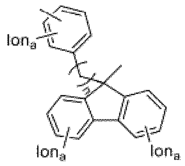
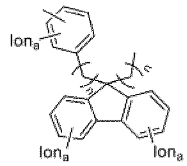
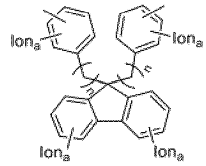
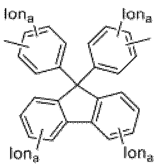

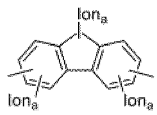
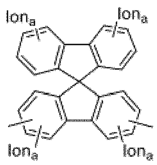
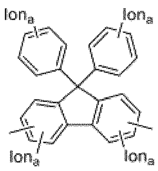
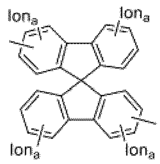
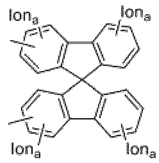

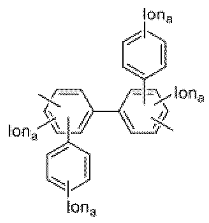
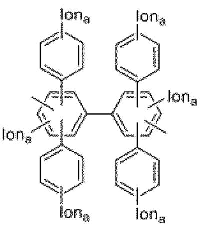
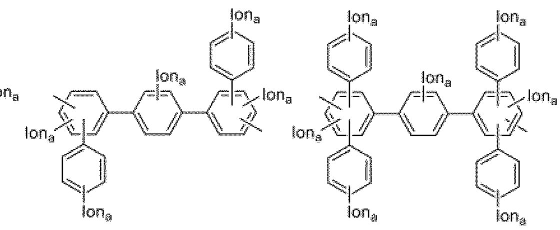

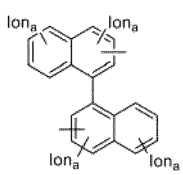
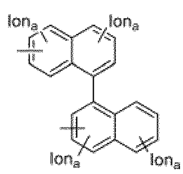
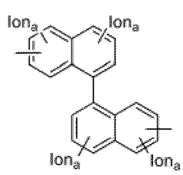
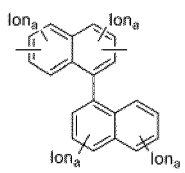

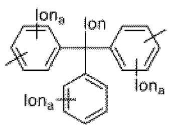 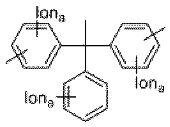 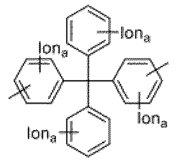 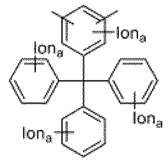

(In the formulae, Ion are the same or different from each other and represent an anion exchange group-containing group; a represents an integer of 0 or more (preferably 0 or 1) in which the anion exchange group-containing group can be bonded; and n represents an integer of 0 or more).

Preferred examples of the hydrophilic group having such structure include fluorene residues represented by the following formula (4).

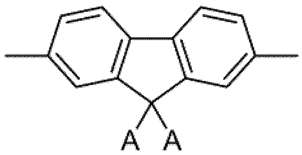

(4)

(In the formula, A are the same or different from each other and represent an anion exchange group-containing group or an anion exchange group-containing cyclic structure.)

Particularly preferred examples of the hydrophilic group having such structure include fluorene residues represented by the following formula (4a), the following formula (4b), the following formula (4c), and the following formula (4d).

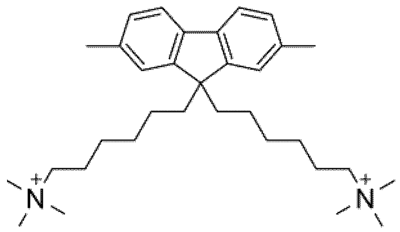

(4a)

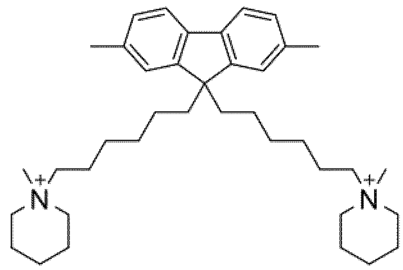

(4b)

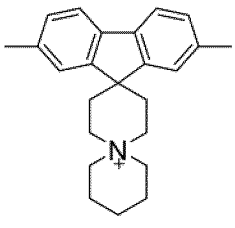

(4c)

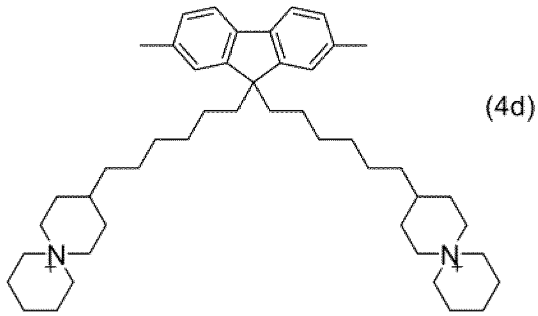

(4d)

An anion exchange resin of the present invention includes: a hydrophobic unit (a) being composed of the hydrophobic group (a) alone, or being composed of a plurality of the hydrophobic groups (a) repeated via ether bond, thioether bond, or carbon-carbon bond; a hydrophobic unit (b) being composed of the hydrophobic group (b) alone, or being composed of a plurality of the hydrophobic groups (b) repeated via ether bond, thioether bond, or carbon-carbon bond; and a hydrophilic unit being composed of the hydrophilic group alone, or being composed of a plurality of the hydrophilic groups repeated via ether bond, thioether bond, or carbon-carbon bond. The hydrophobic unit (a) is preferably composed of the hydrophobic group (a) alone, or composed of a plurality of the hydrophobic groups (a) repeated via carbon-carbon bond. The hydrophobic unit (b) is preferably composed of the hydrophobic group (b) alone, or composed of a plurality of the hydrophobic groups (b) repeated via carbon-carbon bond. The hydrophilic unit is preferably composed of the hydrophilic group alone, or composed of a plurality of the hydrophilic groups repeated via carbon-carbon bond.

The unit corresponds to a block in a block copolymer generally used.

Preferred examples of the hydrophobic unit (a) include units formed by the bisphenol residues represented by the above formula (1) bonded to each other via carbon-carbon bond. The bisphenol residue represented by the above formula

(1) may also be a unit formed by multiple species bonded to each other in random form, in ordered form including alternating, or in block form.

Such hydrophobic unit (a) is represented, for example, by the following formula (11).

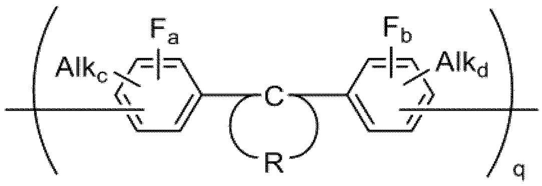

(11)

(In the formula, R, Alk, a, b, c, and d respectively have the same meaning as R, Alk, a, b, c, and d in the above formula (1); and q represents 1 to 200.)

In the above formula (11), q represents, for example, 1 to 200, and preferably 1 to 50.

Further preferred examples of the hydrophobic unit (a) include units formed by the bisphenol residues represented by the above formula (1') bonded to each other via carbon-carbon bond.

Such hydrophobic unit (a) is represented, for example, by the following formula (11').

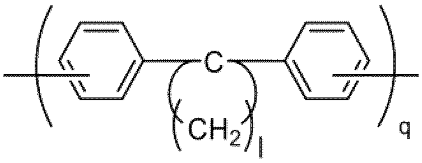

(11')

(In the formula, l has the same meaning as l in the above formula (1'); and q represents 1 to 200.)

In the above formula (11'), q represents, for example, 1 to 200, and preferably 1 to 50.

Preferred examples of the hydrophobic unit (b) include units formed by the divalent hydrophobic groups (b) bonded to each other via carbon-carbon bond in which the hydrophobic group (b) is composed of a singular aromatic ring or is composed of a plurality of aromatic rings which are bonded to each other via a divalent hydrocarbon group, a divalent silicon-containing group, a divalent nitrogen-containing group, a divalent phosphorus-containing group, a divalent oxygen-containing group, a divalent sulfur-containing group, or carbon-carbon bond. The above hydrophobic group (b) may also be a unit formed by multiple species bonded to each other in random form, in ordered form including alternating, or in block form.

Further preferred examples of such hydrophobic unit (b) include units formed by the bisphenol residues represented by the above formula (2) bonded to each other via carbon-carbon bond and units formed by the bisphenol residues represented by the above formula (3) bonded to each other via carbon-carbon bond.

Such hydrophobic unit (b) is represented, for example, by the following formula (12) or the following formula (13).

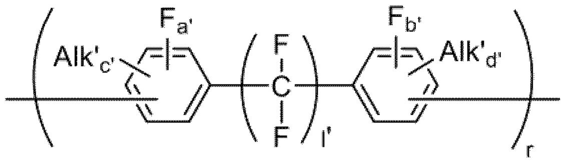

(12)

(In the formula, Alk', a', b', c', d', and l' respectively have the same meaning as Alk', a', b', c', d', and l' in the above formula (2); and r represents 1 to 200.)

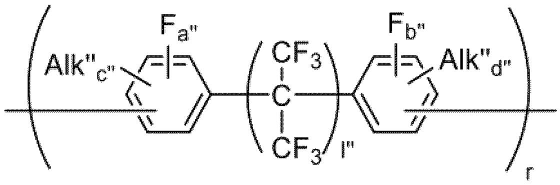

(13)

(In the formula, Alk", a", b", c", d", and l" respectively have the same meaning as Alk", a", b", c", d", and l" in the above formula (3); and r represents 1 to 200.)

In the above formula (12) and the above formula (13), r represents, for example, 1 to 200, and preferably 1 to 50.

Particularly preferred examples of such hydrophobic unit (b) include units formed by the bisphenol residues represented by the above formula (2') bonded to each other via carbon-carbon bond and units formed by the bisphenol residues represented by the above formula (3') bonded to each other via carbon-carbon bond.

Such hydrophobic unit (b) is represented, for example, by the following formula (12') or the following formula (13').

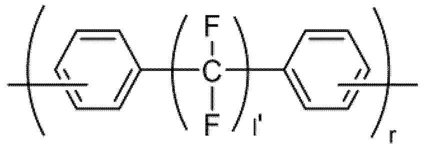

(12')

(In the formula, l' has the same meaning as l' of the above formula (2'); and r represents 1 to 200.)

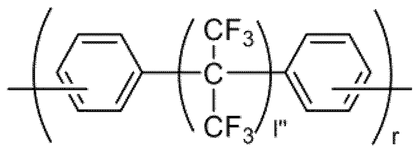

(13')

(In the formula, l'' has the same meaning as l'' of the above formula (3'); and r represents from 1 to 200.)

In the above formula (12') and the above formula (13'), r represents, for example, 1 to 200, and preferably 1 to 50.

Preferred examples of the hydrophilic unit include units formed by the divalent hydrophilic groups bonded to each other via carbon-carbon bond in which the hydrophilic group is composed of a singular aromatic ring or is composed of a plurality of aromatic rings which are bonded to each other via a divalent hydrocarbon group, a divalent silicon-containing group, a divalent nitrogen-containing group, a divalent phosphorus-containing group, a divalent oxygen-containing group, a divalent sulfur-containing group, or carbon-carbon bond, and in which at least one of the linking group or the aromatic ring is bonded to an anion exchange group-containing group. More preferred examples of the hydrophilic unit include units formed by the divalent hydrophilic groups bonded to each other via carbon-carbon bond in which the hydrophilic group is composed of a singular polycyclic compound or is composed of a plurality of polycyclic compounds which are bonded to each other via a divalent hydrocarbon group, a divalent silicon-containing group, a divalent nitrogen-containing group, a divalent phosphorus-containing group, a divalent oxygen-containing group, a divalent sulfur-containing group, or carbon-carbon bond, and in which at least one of the linking group or the aromatic ring is bonded to an anion exchange group via a divalent saturated hydrocarbon group having a carbon number of 2 or more. The divalent hydrophilic group may also be a unit formed by multiple species bonded to each other in random form, in ordered form including alternating, or in block form.

Particularly preferred examples of the hydrophilic unit include units formed by the fluorene residues represented by the above formula (4) bonded to each other via carbon-carbon bond.

Such hydrophilic unit is represented, for example, by the following formula (14).

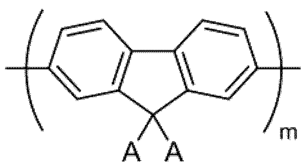

(14)

(In the formula, A has the same meaning as A in the above formula (4); and m represents 1 to 200.)

In the above formula (4), m represents, for example, 1 to 200, and preferably 1 to 50.

Particularly preferred examples of such hydrophilic group include units formed by the hydrophilic groups represented by the above formula (4a) bonded to each other via carbon-carbon bond, units formed by the hydrophilic groups represented by the above formula (4b) bonded to each other via carbon-carbon bond, units formed by the hydrophilic groups represented by the above formula (4c) bonded to each other via carbon-carbon bond, and units formed by the hydrophilic groups represented by the above formula (4d) bonded to each other via carbon-carbon bond.

Such hydrophilic unit is represented, for example, by the following formula (14a), the following formula (14b), the following formula (14c), or the following formula (14d).

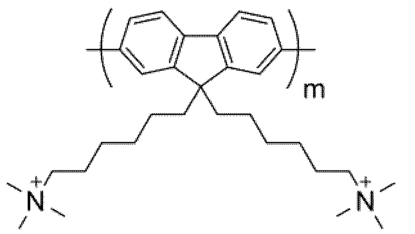

(14a)

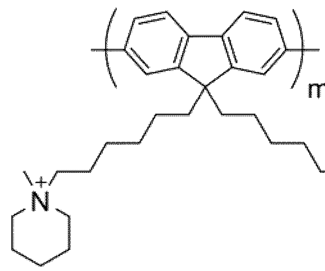

(14b)

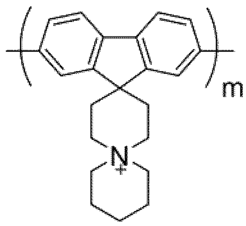

(14c)

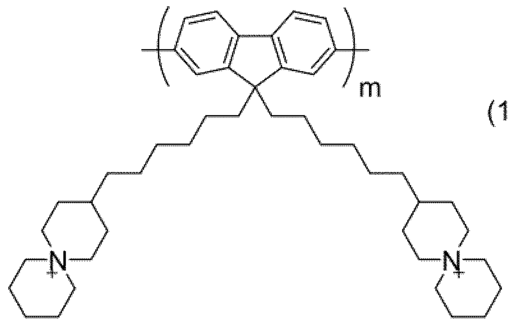

(14d)

(In the formulae, m represents 1 to 200.)

In the above formula (14a), the above formula (14b), the above formula (14c), and the above formula (14d), m represents, for example, 1 to 200, and preferably 1 to 50.

In the anion exchange resin of the present invention, the above hydrophobic unit (a), the above hydrophobic unit (b), and the above hydrophilic unit are bonded via ether bond, thioether bond, or carbon-carbon bond. In particular, the above hydrophobic unit (a), the above hydrophobic unit (b), and the above hydrophilic unit are preferably bonded via carbon-carbon bond.

Preferred examples of such anion exchange resin include anion exchange resins in which the hydrophobic unit (a) represented by the above formula (11), the hydrophobic unit (b) represented by the above formula (12) or the above formula (13), and the hydrophilic unit represented by the above formula (14) are bonded via carbon-carbon bond.

Such anion exchange resin is represented, for example, by the following formula (17) or the following formula (18).

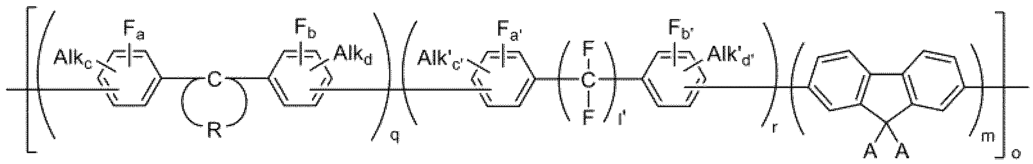

(17)

(In the formula, R, Alk, a, b, c, and d respectively have the same meaning as R, Alk, a, b, c, and d in the above formula (11); Alk', a', b', c', d' and l' respectively have the same meaning as Alk', a', b', c', d', and l' in the above formula (12); A has the same meaning as A in the above formula (14); q, r, and m show a blending ratio or a repeating number and represent 1 to 200; and o shows a repeating number and represents 1 to 100.)

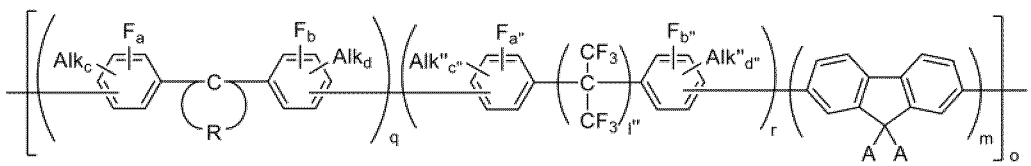

(18)

(In the formula, R, Alk, a, b, c, and d respectively have the same meaning as R, Alk, a, b, c, and d in the above formula (11); Alk", a", b", c", d" and l" respectively have the same meaning as Alk", a", b", c", d", and l" in the above formula (13); A has the same meaning as A in the above formula (14); q, r, and m show a blending ratio or a repeating number and represent 1 to 200; and o shows a repeating number and represents 1 to 100.)

Further preferred examples of such anion exchange resin include anion exchange resins in which the hydrophobic unit (a) represented by the above formula (11'), the hydrophobic unit (b) represented by the above formula (12') or

the above formula (13'), and the hydrophilic unit represented by the above formula (14a), the above formula (14b), the above formula (14c), or the above formula (14d) are bonded via carbon-carbon bond.

Such anion exchange resin is represented, for example, by the following formula (17a), the following formula (17b), the following formula (17c), the following formula (17d), the following formula (18a), the following formula (18b), the following formula (18c), or the following formula (18d).

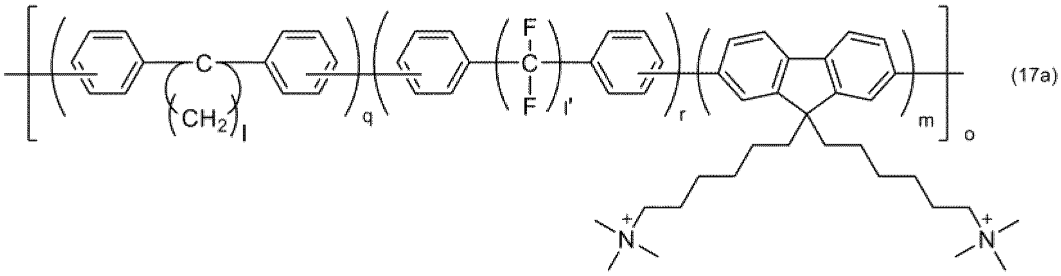

(17a)

(In the formula, l has the same meaning as l in the above formula (11'); l' has the same meaning as l' in the above formula (12'); q, r, and m show a blending ratio or a repeating number and represent 1 to 200; and o shows a repeating number and represents 1 to 100.)

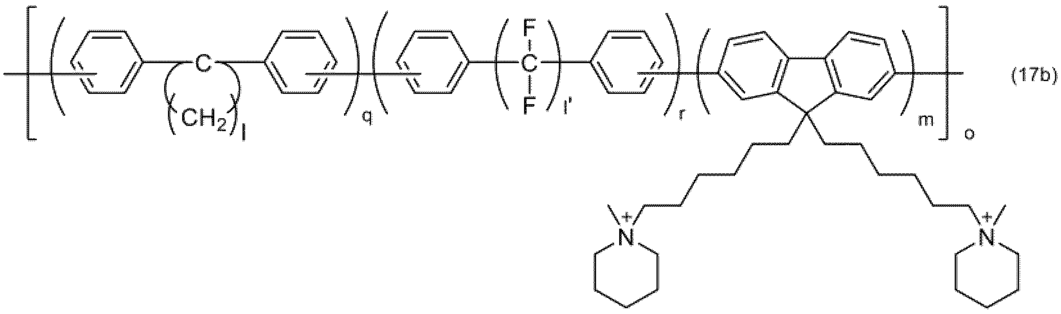

(17b)

(In the formula, l has the same meaning as l in the above formula (11'); l' has the same meaning as l' in the above formula (12'); q, r, and m show a blending ratio or a repeating number and represent 1 to 200; and o shows a repeating number and represents 1 to 100.)

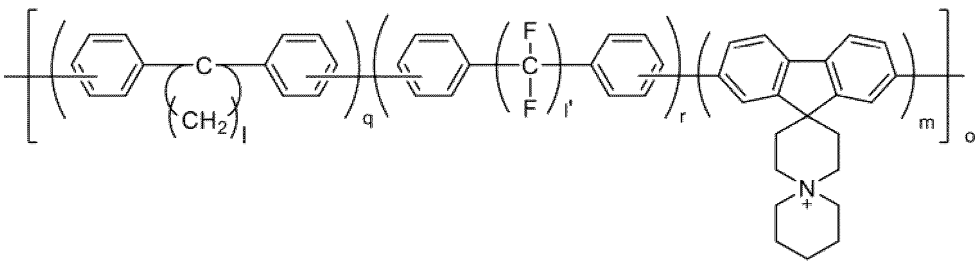

(17c)

(In the formula, l has the same meaning as l in the above formula (11'); l' has the same meaning as l' in the above formula (12'); q, r, and m show a blending ratio or a repeating number and represent 1 to 200; and o shows a repeating number and represents 1 to 100.)

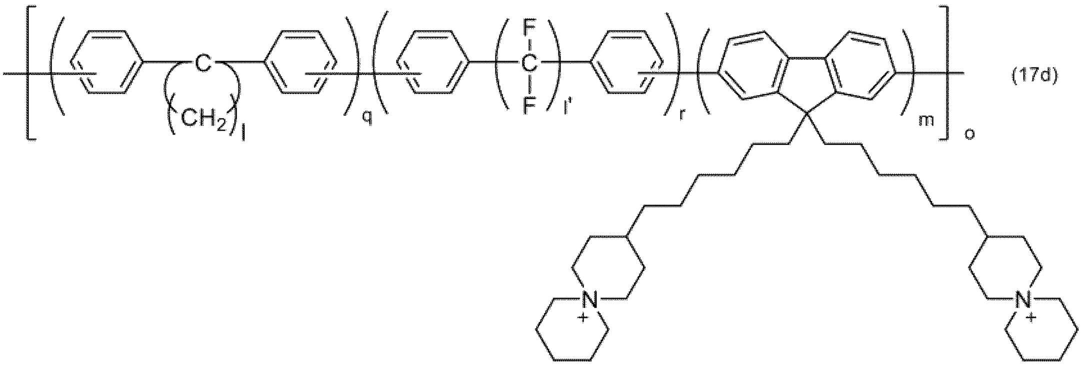

(17d)

(In the formula, l has the same meaning as l in the above formula (11'); l' has the same meaning as l' in the above formula (12'); q, r, and m show a blending ratio or a repeating number and represent 1 to 200; and o shows a repeating number and represents 1 to 100.)

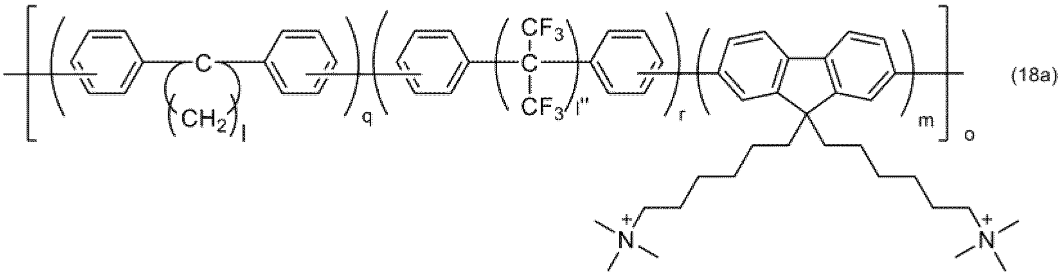

(18a)

(In the formula, l has the same meaning as l in the above formula (11'); l" has the same meaning as l" in the above formula (13'); q, r, and m show a blending ratio or a repeating number and represent 1 to 200; and o shows a repeating number and represents 1 to 100.)

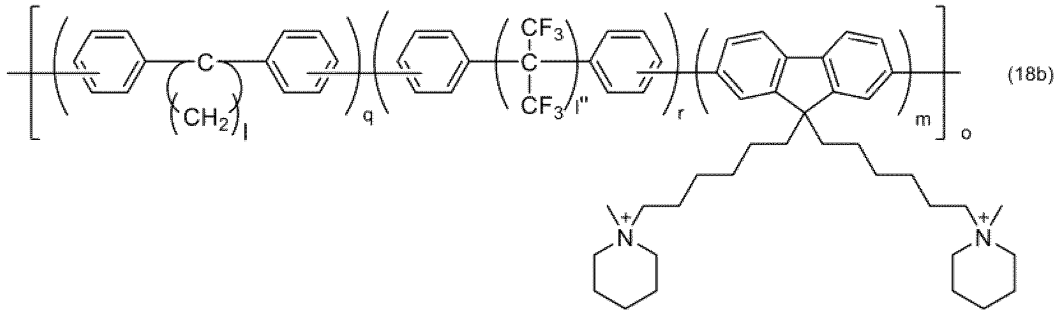

(18b)

(In the formula, l has the same meaning as l in the above formula (11'); l" has the same meaning as l" in the above formula (13'); q, r, and m show a blending ratio or a repeating number and represent 1 to 200; and o shows a repeating number and represents 1 to 100.)

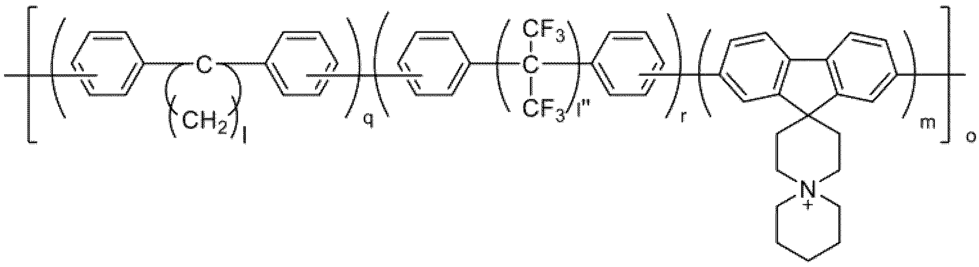

(18c)

(In the formula, l has the same meaning as l in the above formula (11'); l" has the same meaning as l" in the above formula (13'); q, r, and m show a blending ratio or a repeating number and represent 1 to 200; and o shows a repeating number and

represents 1 to 100.)

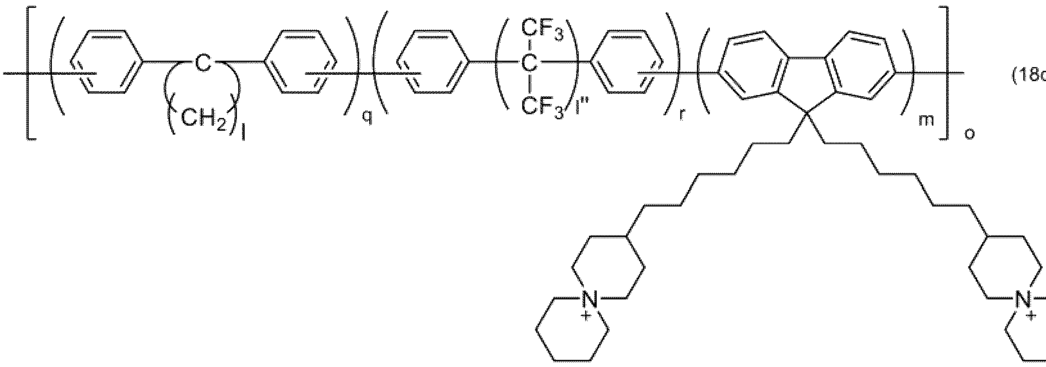

(18d)

In the anion exchange resin of the present invention, q, r, and m show a blending ratio and o shows a repeating number, all of which are appropriately set according to the purpose and application. However, the percentage of the hydrophobic group (a) contained in the hydrophobic units (hydrophobic unit (a) and hydrophobic unit (b)) in the anion exchange resin of the present invention (hydrophobic unit (a) ratio = $q/(q+r)\times100$) is preferably 5 to 65, is more preferably 10 to 60, and is further preferably 15 to 55. If the ratio is within this range, the cation exchange resin has excellent gas permeability (in particular, oxygen gas permeability).

The number average molecular weight of such anion exchange resin is, for example, 10 to 1000 kDa, and is preferably 30 to 500 kDa, as mentioned above.

The method of producing the anion exchange resin is not particularly limited and any known methods can be adopted. The method by polycondensation reaction is preferably adopted.

In the case where an anion exchange resin is produced by this method, the anion exchange resin can be produced: by preparing a monomer for forming a hydrophobic group (a); by preparing a monomer for forming a hydrophobic group (b); by preparing a monomer for forming a hydrophilic group having a precursor functional group for an anion exchange group-containing group; by polymerizing the monomer for forming a hydrophobic group (a), the monomer for forming a hydrophobic group (b), and the monomer for forming a hydrophilic group having a precursor functional group for an anion exchange group-containing group to form a polymer; and by ionizing the precursor functional group for an anion exchange group-containing group in the polymer. Alternatively, the anion exchange resin can be produced: by preparing a monomer for forming a hydrophobic group (a); by preparing a monomer for forming a hydrophobic group (b); by preparing a monomer for forming a hydrophilic group; by polymerizing the monomer for forming a hydrophobic group (a), the monomer for forming a hydrophobic group (b), and the monomer for forming a hydrophilic group to form a polymer; and by introducing a substitution group having an anion exchange group-containing group into the polymer.

As for the polycondensation reaction, any general methods known in the art can be adopted. Cross-coupling which forms carbon-carbon bond is preferably adopted.

Preferred examples of the monomer (a) for forming a hydrophobic group include compounds represented by the following formula (21), which corresponds to the above formula (1).

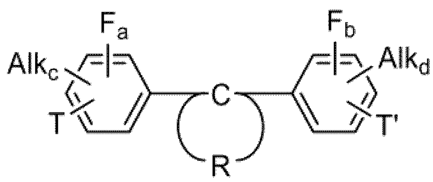

(21)

(In the formula, R, Alk, a, b, c, and d respectively have the same meaning as R, Alk, a, b, c, and d in the above formula (1); and Tand T' are the same or different from each other and represent a halogen atom, a pseudohalide, boronic acid group, a boronic acid derivative, or hydrogen atom.)

Particularly preferred examples of the monomer (a) for forming a hydrophobic group include compounds represented by the following formula (21'), which corresponds to the above formula (1').

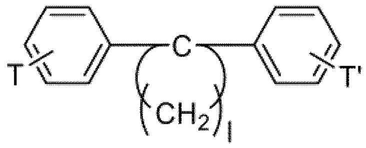

(21')

(In the formula, l has the same meaning as l in the above formula (1'); and T and T' are the same or different from each other and represent a halogen atom, a pseudohalide, boronic acid group, a boronic acid derivative, or hydrogen atom.)

Preferred examples of the monomer (b) for forming a hydrophobic group include compounds represented by the following formula (22), which corresponds to the above formula (2), and compounds represented by the following formula (23), which corresponds to the above formula (3).

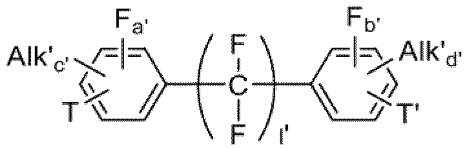

(22)

(In the formula, Alk', a', b', c', d', and l' respectively have the same as Alk', a', b', c', d', and l' in the above formula (2); and T and T' are the same or different from each other and represent a halogen atom, a pseudohalide, boronic acid group, a boronic acid derivative, or hydrogen atom.)

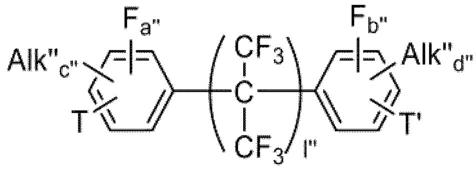

(23)

(In the formula, Alk", a", b", c", d", and l" respectively have the same as Alk", a", b", c", and l" in the above formula (3); and T and T' are the same or different from each other and represent a halogen atom, a pseudohalide, boronic acid group, a boronic acid derivative, or hydrogen atom.)

Particularly preferred examples of the monomer (b) for forming a hydrophobic group include compounds represented by the following formula (22'), which corresponds to the above formula (2'), and compounds represented by the following formula (23'), which corresponds to the above formula (3').

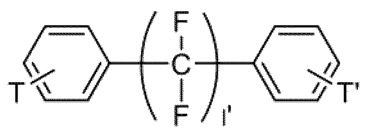

(22')

(In the formula, l' has the same meaning as l' in the above formula (2'); and T and T' are the same or different from each other and represent a halogen atom, a pseudohalide, boronic acid group, a boronic acid derivative, or hydrogen atom.)

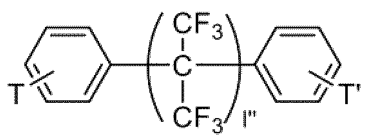

(23')

(In the formula, l" has the same meaning as l" in the above formula (3'); and T and T' are the same or different from each other and represent a halogen atom, a pseudohalide, boronic acid group, a boronic acid derivative, or hydrogen atom.)

Preferred examples of the monomer for forming a hydrophilic group include compounds represented by the following formula (24), which corresponds to the above formula (4).

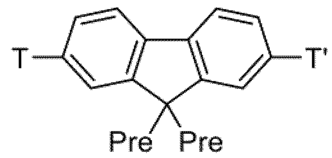 (24)

(In the formula, Pre are the same or different from each other and represent a precursor functional group for an anion exchange group-containing group; and T and T' are the same or different from each other and represent a halogen atom, a pseudohalide, boronic acid group, a boronic acid derivative, or hydrogen atom.)

In copolymerizing the monomer for forming a hydrophobic group (a), the monomer for forming a hydrophobic group (b), and the monomer for forming a hydrophilic group having a precursor functional group for an anion exchange group-containing group by cross-coupling, the blending amount of each monomer is respectively adjusted so as to achieve a desired blending ratio of the hydrophobic unit (a), the hydrophobic unit (b), and the hydrophilic unit in the resulting anion exchange resin precursor polymer.

In these methods, the monomer for forming hydrophobic group (a), the monomer for forming hydrophobic group (b), and the monomer for forming hydrophilic group having a precursor functional group for an anion exchange group-containing group can be dissolved in a solvent such as N,N-dimethylacetamide or dimethyl sulfoxide, for example; and the polymerization can be carried out with bis(cycloocta-1,5-diene)nickel(0) as a catalyst. Any other known methods can be adopted.

The reaction temperature in the cross-coupling reaction is, for example, -100 to 300°C, and is preferably -50 to 200°C. The reaction time is, for example, 1 to 48 hours, and is preferably 2 to 5 hours.

By coupling the compound represented by the above formula (21), the compound represented by the above formula (22), and the compound represented by the above formula (24), an anion exchange resin precursor polymer represented by the following formula (27) is obtained.

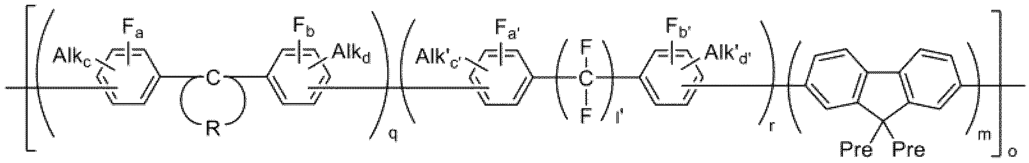 (27)

(In the formula, R, Alk, a, b, c, and d respectively have the same meaning as R, Alk, a, b, c, and d in the above formula (21); Alk', a', b', c', d' and l' respectively have the same meaning as Alk', a', b', c', d', and l' in the above formula (22); Prre has the same meaning as A in the above formula (24); q, r, and m show a blending ratio or a repeating number and represent 1 to 200; and o shows a repeating number and represents 1 to 100.)

By coupling the compound represented by the above formula (21), the compound represented by the above formula (23), and the compound represented by the above formula (24), an anion exchange resin precursor polymer represented by the following formula (28) is obtained.

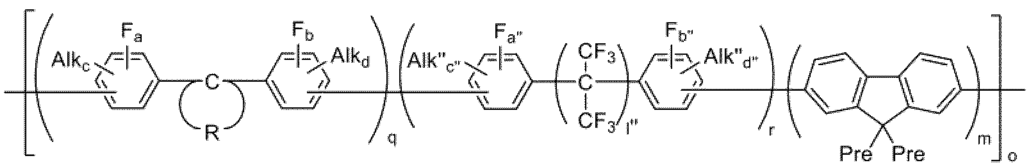 (28)

(In the formula, R, Alk, a, b, c, and d respectively have the same meaning as R, Alk, a, b, c, and d in the above formula (21); Alk", a", b", c", d" and l" respectively have the same meaning as Alk", a", b", c", d", and l" in the above formula (23); Pre has the same meaning as Pre in the above formula (24); q, r, and m show a blending ratio or a repeating number and represent 1 to 200; and o shows a repeating number and represents 1 to 100.)

Particularly preferably, by coupling the compound represented by the above formula (21'), the compound represented by the above formula (22'), and the compound represented by the above formula (24), an anion exchange resin precursor polymer represented by the following formula (27') is obtained.

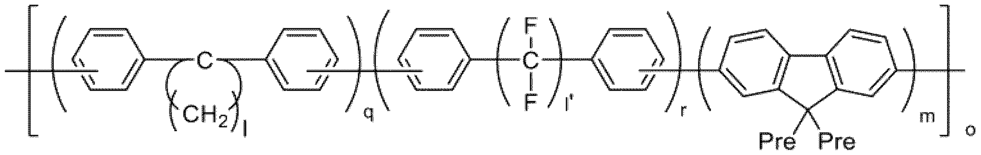

(27')

(In the formula, l has the same meaning as l in the above formula (21'); l' has the same meaning as l' in the above formula (22'); Pre has the same meaning as Pre in the above formula (24); q, r, and m show a blending ratio or a repeating number and represent 1 to 200; and o shows a repeating number and represents 1 to 100.)

Particularly preferably, by coupling the compound represented by the above formula (21'), the compound represented by the above formula (23'), and the compound represented by the above formula (24), an anion exchange resin precursor polymer represented by the following formula (28') is obtained.

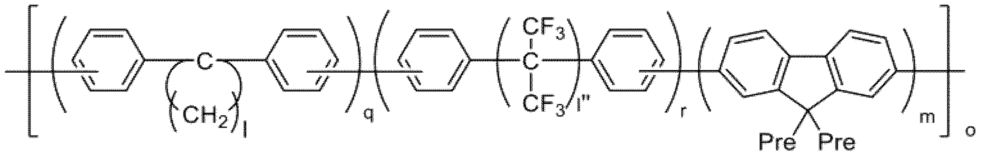

(28')

(In the formula, l has the same meaning as l in the above formula (21'); l" has the same meaning as l" in the above formula (23'); Pre has the same meaning as Pre in the above formula (24); q, r, and m show a blending ratio or a repeating number and represent 1 to 200; and o shows a repeating number and represents 1 to 100.)

In this method, the precursor functional group for an anion exchange group-containing group is then ionized. The method of ionization is not limited and any known methods can be adopted.

The anion exchange resin precursor polymer can be dissolved in a solvent such as N,N-dimethylacetamide or dimethyl sulfoxide, for example, and can be ionized using methyl iodide or the like as an alkylating agent. Any other known methods can be adopted.

The reaction temperature in the ionization reaction is, for example, 0 to 100°C, and is preferably 20 to 80°C. The reaction time is, for example, 24 to 72 hours, and is preferably 48 to 72 hours.

By ionizing the anion exchange resin precursor polymer represented by the above formula (27), the anion exchange resin represented by the above formula (17) is obtained. By ionizing the anion exchange resin precursor polymer represented by the above formula (28), the anion exchange resin represented by the above formula (27) is obtained.

The ion exchange group capacity of the anion exchange resin is, for example, 0.1 to 4.0 meq./g, and is preferably 0.6 to 3.0 meq./g.

The ion exchange group capacity can be calculated by the following equation (30).

[ion exchange group capacity (meq./g)] = the amount of the anion exchange group introduced per the hydrophilic unit × the repeating unit of the hydrophilic unit × 1000 /

(the molecular weight of the hydrophobic unit × the repeating unit number of the hydrophobic unit + the molecular weight of the hydrophilic unit × the repeating unit number of the hydrophilic unit + the molecular weight of the ion exchange group × the repeating unit number of the hydrophilic unit) (30) (3)

The amount of the ion exchange group introduced is defined as the number of the ion exchange group per unit of the hydrophilic group. The amount of the anion exchange group introduced is a mole number (mol) of the anion exchange group introduced in the main chain or the side chain of the hydrophilic group.

Such anion exchange resin has: a divalent hydrophobic group (a) comprising a bisphenol residue represented by the above formula (1); a divalent hydrophobic group (b) being composed of a singular aromatic ring, or being composed of a plurality of aromatic rings which are bonded to each other via a divalent hydrocarbon group, a divalent silicon-containing group, a divalent nitrogen-containing group, a divalent phosphorus-containing group, a divalent oxygen-containing group, a divalent sulfur-containing group, or carbon-carbon bond; and a divalent hydrophilic group being composed of a singular aromatic ring, or being composed of a plurality of aromatic rings which are bonded to each other via a linking group and/or carbon-carbon bond, in which the linking group is a divalent hydrocarbon group, a divalent silicon-containing group, a divalent nitrogen-containing group, a divalent phosphorus-containing group, a divalent oxygen-containing group, or a divalent sulfur-containing group, and at least one of the linking group or the aromatic ring is bonded to an anion exchange group via a divalent saturated hydrocarbon group having a carbon number of 2 or more; in which the anion exchange resin

has: a hydrophobic unit (a) being composed of the hydrophobic group (a) alone, or being composed of a plurality of the hydrophobic groups (a) repeated via ether bond, thioether bond, or carbon-carbon bond; a hydrophobic unit (b) being composed of the hydrophobic group (b) alone, or being composed of a plurality of the hydrophobic groups (b) repeated via ether bond, thioether bond, or carbon-carbon bond; and a hydrophilic unit being composed of the hydrophilic group alone, or being composed of a plurality of the hydrophilic groups repeated via ether bond, thioether bond, or carbon-carbon bond; and in which the hydrophobic unit (a), the hydrophobic unit (b), and the hydrophilic unit are bonded via ether bond, thioether bond, or carbon-carbon bond. Thus, this anion exchange resin has excellent electrical properties (anion conductivity) and chemical properties (gas permeability and water uptake property) due to the introduction of the divalent hydrophobic group (a) and the divalent hydrophilic group.

In the case where the anion exchange resin has a hydrophilic unit being composed of hydrophilic groups repeated via carbon-carbon bond, the hydrophilic unit does not have an ether bond, and therefore the anion exchange resin has excellent durability such as alkali resistance. More specifically, if the hydrophilic unit has an ether bond, the decomposition by hydroxide ion ($OH^-$) as described below may occur, and alkali resistance may not be sufficient.

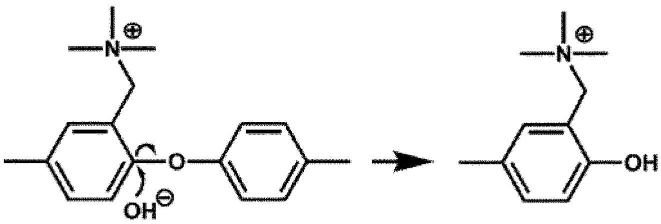

In contrast, since the hydrophilic unit of the anion exchange resin having a hydrophilic unit being composed of the hydrophilic groups repeated via carbon-carbon bond does not have an ether bond, the decomposition by the mechanism described above does not occur, and therefore the anion exchange resin has excellent durability such as alkali resistance.

The present invention includes electrolyte layers (electrolyte membranes) obtained by using such anion exchange resin. An electrolyte membrane of the present invention is applicable to various electrochemical applications such as fuel cells, water electrolysis hydrogen generators, and electrochemical hydrogen pumps, but is particularly suitable for use in water electrolysis hydrogen generators. In fuel cells, electrochemical hydrogen pumps, and water electrolysis hydrogen generators, the electrolyte membrane is used in a structural state in which catalyst layers, electrode substrates, and separators are sequentially laminated on both sides. Among these, the structure material with catalyst layers and gas diffusion substrates sequentially laminated on both sides of the electrolyte membrane (with a layer structure of gas diffusion substrate/catalyst layer/electrolyte membrane/catalyst layer/gas diffusion substrate) is called membrane electrode assembly (MEA). An electrolyte membrane of the present invention is suitably used as an electrolyte membrane that constitutes an MEA.

The anion exchange resin described above can be used as an electrolyte membrane (i.e., the electrolyte membrane contains the anion exchange resin described above).

The electrolyte membrane can be reinforced, for example, with a known reinforcing material such as a porous substrate, and can also be subjected to various treatments such as biaxial stretching treatments to control the molecular orientation and heat treatments to control crystallinity and residual stress. Known fillers can be added to the electrolyte membrane to increase the mechanical strength, and the electrolyte membrane can be composited with a reinforcing agent such as a glass nonwoven fabric by pressing.

In addition, various additives normally used in electrolyte membranes, such as compatibilizers to improve compatibility, antioxidants to prevent resin degradation, and antistatic agents and lubricants to improve the handling during the film forming and processing may be included as needed to the extent that they do not affect processing and performance as an electrolyte membrane.

The thickness of the electrolyte membrane is not particularly limited and is suitably set according to the purpose and application.

The thickness of the electrolyte membrane is, for example, 1.2 to 350 μm, and is preferably 5 to 200 μm.

The present invention also includes a binder for forming the electrode catalyst layer containing an anion exchange resin described above, and a battery electrode catalyst layer containing a binder for forming the electrode catalyst layer. Since the exchange resin described above has excellent anion conductivity and gas permeability, gas diffusivity can easily be adjusted and controlled by using it as a binder for forming the electrode catalyst layer.

Specifically, as the method for including the anion exchange resin in the binder for forming an electrode catalyst layer, for example, the binder for forming the electrode catalyst layer is prepared by cutting the anion exchange resin into pieces, and then dissolving the resin in a suitable amount of an organic solvent such as alcohols.

In the binder for forming the electrode catalyst layer, the amount of the anion exchange resin is, for example, 2 to 10 parts by weight, and preferably 2 to 5 parts by weight with respect to 100 parts by weight of the binder for forming the

electrode catalyst layer.

By using the binder for forming an electrode catalyst layer for the formation of the catalyst layer of the electrode (the battery electrode catalyst layer), the anion exchange resin can be included in the catalyst layer (the battery electrode catalyst layer).

Although the embodiments of the present invention have been described hereinabove, embodiments of the present invention are not limited to these embodiments, but may be modified as appropriate to the extent which does not change the scope of the invention.

EXAMPLES

The present invention is described based on the Examples and the Comparative Examples, but the present invention is not limited by the following Examples.

[Example 1: Synthesis of anion exchange resin $QC6_{17}PA$ (IEC = 1.7 meq./g,

$$q/(q+r)\times 100 = 17,\ m/(q+r+m)\times 100 = 38]$$

<Synthesis of monomer 1>

To a 300 mL round-shaped three-necked flask equipped with a nitrogen inlet and a condenser were added cyclohexanone (12.0 g, 122 mmol), aniline (50.0 g, 536 mmol), and 12 M hydrochloric acid (40.0 mL). The temperature was gradually increased and the mixed solution was stirred at 80°C for 24 hours. The solution was then allowed to cool, and ion-exchanged water (80.0 mL) and sodium hydroxide were added to neutralize the solution. The target product was extracted from the reaction solution with ethyl acetate, and the resulting organic phase was washed with water and was dehydrated with sodium sulfate. This solution was concentrated and aniline was distilled off from the solution under reduced pressure. The crude product obtained was purified using silica gel chromatography (developing solvent: hexane : ethyl acetate = 4:1 → 2:1 → 1:1), and was dried under vacuum for 12 hours to obtain a precursor compound in a yield of 40%.

To a 100 mL eggplant flask were added the precursor compound (1.00 g, 3.75 mmol) and 6M hydrochloric acid (10 mL). The flask was cooled in an ice bath at 0°C, and ion-exchanged water (10 mL) in which sodium nitrite (0.620 g, 8.99 mmol) was dissolved was slowly added dropwise. The reaction was then carried out at 0°C for 30 minutes. After that, concentrated hydrochloric acid (10 mL) in which copper(I) chloride (1.50 g, 15.1 mmol) was dissolved was added and the reaction was carried out for 8 hours. The solution was allowed to cool to room temperature and was then filtered through celite using hexane. After that, the product was extracted with hexane and washed with pure water, and was then dehydrated using sodium sulfate. After removing the dehydrating agent by filtration, the solution was concentrated in an evaporator. The resulting residue was purified by silica gel column chromatography (developing solvent: hexane). The resulting solution was concentrated and was dried under vacuum overnight to obtain a monomer 1 represented by the following formula in a yield of 57%.

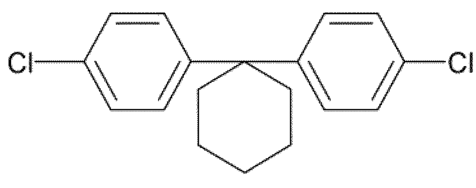

<Synthesis of monomer 2>

To a 100 mL round-shaped three-necked flask equipped with a nitrogen inlet and a condenser were added 1,6-diiodoperfluorohexane (5.54 g, 10.0 mmol), 3-chloroiodobenzene (11.9 g, 50 mmol), and dimethylsulfoxide (60 mL). After the mixture was stirred to form a homogeneous solution, copper powder (9.53 g, 150 mmol) was added, and the reaction was carried out at 120°C for 48 hours. The reaction was quenched by adding the reaction solution dropwise to 0.1 M nitric acid aqueous solution. The mixture was filtered to collect the precipitate. The precipitate was washed with methanol, and then the filtrate was collected. After similar procedures were repeated, a white solid was precipitated by adding pure water to the combined filtrate. The white solid was filtered and collected, and washed with a mixed solution of pure water and methanol (pure water / methanol = 1/1). The white solid was then dried under vacuum overnight (60°C) to obtain a

monomer 2 (white solid) represented by the following formula in a yield of 84%.

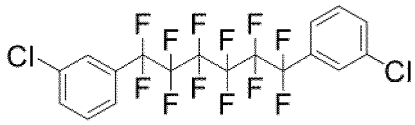

<Synthesis of monomer 3>

To a 500 mL round-shaped three-necked flask were added fluorene (83.1 g, 0.50 mol), N-chlorosuccinimide (167 g, 1.25 mol), and acetonitrile (166 mL). After the mixture was stirred to form a homogeneous solution, 12 M hydrochloric acid (16.6 mL) was added, and the reaction was carried out at room temperature for 24 hours. The reaction mixture was filtered to collect the precipitate. The precipitate was washed with methanol and with pure water, and was then dried under vacuum overnight (60°C) to obtain a monomer 3 (white solid) represented by the following formula in a yield of 65%.

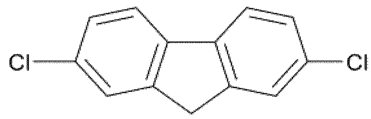

<Synthesis of monomer 4>

To a 300 mL round-shaped three-necked flask were added the monomer 3 (8.23 g, 35.0 mmol) and 1,6-dibromohexane (53 mL). After the mixture was stirred to form a homogeneous solution, a mixed solution of tetrabutylammonium (2.26 g, 7.00 mmol), potassium hydroxide (35.0 g), and pure water (35 mL) were added, and the reaction was carried out at 80°C for 1 hour. The reaction was quenched by adding pure water to the reaction solution. The target compound was extracted with dichloromethane from the water phase. The combined organic phase was washed with pure water and with sodium chloride solution, and then water, dichloromethane, and 1,6-dibromohexane were distilled off. The crude product was purified by silica gel column chromatography (developing solvent: dichlorometane / hexane = 1/4), and was then dried under vacuum overnight (60°C) to obtain a monomer 4 (pale yellow solid) as shown in the following formula in a yield of 75%.

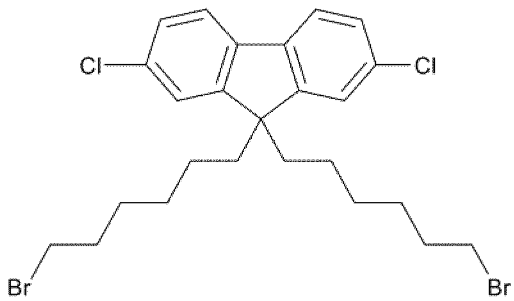

<Synthesis of monomer 5>

To a 300 mL round-shaped three-necked flask were added the monomer 4 (13.2 g, 23.4 mol) and tetrahydrofuran (117 mL). After the mixture was stirred to form a homogeneous solution, 40 wt% dimethylamine aqueous solution (58.6 mL) was added, and the reaction was carried out at room temperature for 24 hours. The reaction was quenched by adding a saturated sodium hydrogen carbonate aqueous solution to the reaction solution. Tetrahydrofuran was removed and then the target ingredient was extracted by adding hexane. The organic phase was washed with sodium chloride solution, and then water and hexane were distilled off. The resulting crude product was dried under vacuum overnight at 40°C to obtain a monomer 5 (pale yellow solid) as shown in the following formula in a yield of 75%.

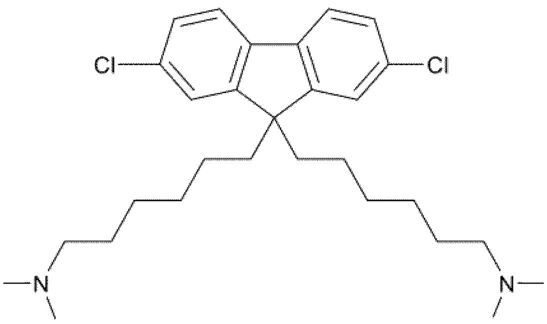

(Copolymerization reaction)

To a 100 mL round-shaped three-necked flask equipped with a nitrogen inlet and a condenser were added the monomer 1 (0.120 g, 0.394 mmol), the monomer 2 (1.03 g, 1.97 mmol), the monomer 5 (0.695 g, 1.42 mmol), 2,2'-bipyridine (2.84 g, 18.2 mmol), and N,N-dimethylacetamide (15.8 mL). After the mixture was stirred to form a homogeneous solution, bis(1,5-cyclooctadiene)nickel(0) (2.50 g, 9.09 mmol) was added, and the reaction was carried out at 85°C for 3 hours. The reaction was quenched by adding the reaction mixture dropwise to a mixed solution of methanol and 12 M hydrochloric acid (methanol / 12 M hydrochloric acid = 1/8). The reaction mixture was filtered to collect the precipitate. The precipitate was washed with hydrochloric acid, with potassium carbonate, and with pure water, and was then dried under vacuum (60°C, 24 hours) to obtain an anion exchange resin precursor polymer $C6_{17}PA$ (pale yellow solid) represented by the following formula in a yield of 98%.

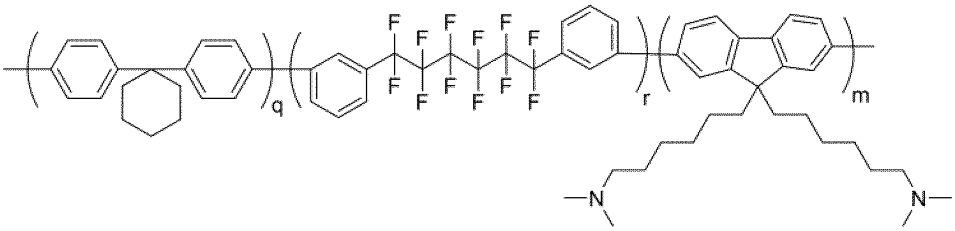

(Quaternization reaction and membrane formation)

To a 100 mL eggplant flask were added the anion exchange resin precursor polymer $C6_{17}PA$ (1.52 g) and N,N-dimethylacetamide (21.3 mL). After the mixture was stirred at 50°C to form a homogeneous solution, dimethyl sulfuric acid (6.87 mL, 72.4 mmol) was added, and the reaction was carried out at 50°C for 48 hours. The reaction was quenched by adding the reaction solution dropwise to pure water. The mixture was filtered to collect the precipitate. The precipitate was washed with pure water, and was then dried under vacuum (50°C, 24 hours) to obtain an anion exchange resin $QC6_{17}PA$ (pale yellow solid). The resulting anion exchange resin $QC6_{17}PA$ (about 180 mg) and N,N-dimethylacetamide (about 3.0 mL) were added to an eggplant flask. The mixture was stirred to form a homogeneous solution and was then filtered. The filtrate was poured onto a glass plate rimmed with silicone rubber and was dried on a horizontally adjusted hot plate (45°C). This results in a membrane of the anion exchange resin $QC6_{17}PA$ represented by the following formula.

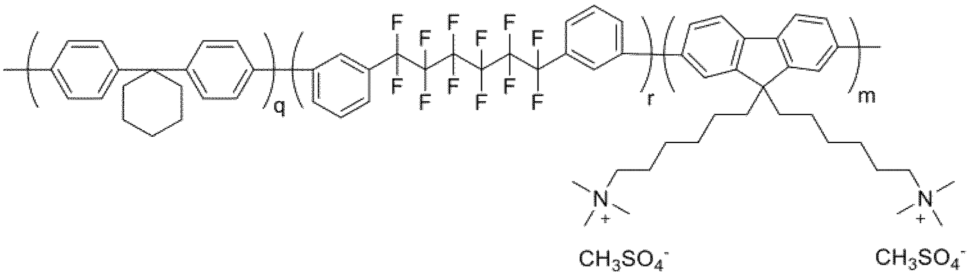

[Example 2: Synthesis of anion exchange resin $QC6_{33}PA$ (IEC = 1.6 meq./g,

$$q/(q+r)\times 100 = 33,\ m/(q+r+m)\times 100 = 38]$$

A membrane of an anion exchange resin $QC6_{33}PA$ was obtained by a similar method as described above using the above monomer 1, the above monomer 2, and the above monomer 5 with modifying the amount of reagents prepared if needed.

[Example 3: Synthesis of anion exchange resin $QC6_{50}PA$ (IEC = 1.7 meq./g,

$$q/(q+r)\times 100 = 50,\ m/(q+r+m)\times 100 = 38]$$

A membrane of an anion exchange resin $QC6_{50}PA$ was obtained by a similar method as described above using the above monomer 1, the above monomer 2, and the above monomer 5 with modifying the amount of reagents prepared if needed.

[Example 4: Synthesis of anion exchange resin $QC6_{17}PA$ (IEC = 2.2 meq./g,

$$q/(q+r)\times 100 = 17,\ m/(q+r+m)\times 100 = 38]$$

A membrane of an anion exchange resin $QC6_{17}PA$ was obtained by a similar method as described above using the above monomer 1, the above monomer 2, and the above monomer 5 with modifying the amount of reagents prepared if needed.

[Example 5: Synthesis of anion exchange resin $QC6_{50}PA$ (IEC = 2.2 meq./g,

$$q/(q+r)\times 100 = 50,\ m/(q+r+m)\times 100 = 38]$$

A membrane of an anion exchange resin $QC6_{50}PA$ was obtained by a similar method as described above using the above monomer 1, the above monomer 2, and the above monomer 5 with modifying the amount of reagents prepared if needed.

[Comparative Example 1: Synthesis of anion exchange resin QPAF-4 (IEC = 1.5 meq./g,

$$q/(q+r)\times 100 = 0,\ m/(q+r+m)\times 100 = 38]$$

A membrane of an anion exchange resin QPAF-4 represented by the following formula was obtained by a similar method as described above using the above monomer 2 and the above monomer 5 with modifying the amount of reagents prepared if needed.

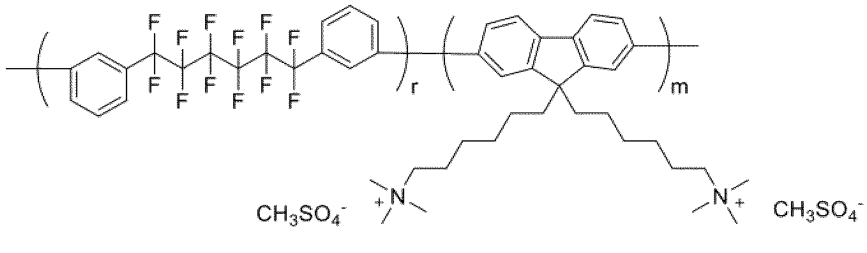

[Comparative Example 2: Synthesis of anion exchange resin QPAF-4 (IEC = 2.0 meq./g,

$$q/(q+r)\times 100 = 0,\ m/(q+r+m)\times 100 = 38]$$

A membrane of an anion exchange resin QPAF-4 represented by the above formula was obtained by a similar method as described above using the above monomer 2 and the above monomer 5 with modifying the amount of reagents prepared if needed.

<Gas permeability>

The permeability of hydrogen gas and oxygen gas was measured for the membranes of the anion exchange resins obtained in the Examples and the Comparative Examples. Specifically, the membranes of the anion exchange resins obtained in the Examples and the Comparative Examples were cut into a piece having a width of 4.5 cm and a length of 4.5 cm as a measurement sample. A gas permeability measurement device (made by GTR TEC Corporation, product name: GTR-20TXFYC) was used as the measurement device. The test gas (hydrogen or oxygen) was passed through the top of the membrane and the carrier gas (argon in the case where the test gas was hydrogen or helium in the case where the test gas was oxygen) was passed through the bottom of the membrane, and the test gas permeating the membrane was measured with the carrier gas using gas chromatography (made by Yanaco Analytical Systems Inc., product name: G2700). The gas permeability P ($cm^3(STP)\cdot cm\cdot s^{-1}\cdot cm^{-2}\cdot cmHg^{-1}$) was calculated by the following equation from the cell temperature T (K), the volume of the permeating gas q ($cm^3$), the film thickness d (cm), the time to pass through the measuring tube t (s), the permeation area a ($cm^2$), and the partial pressure of the test gas p (cmHg).

$$P = (273/T) \times ((q\times d)/(t\times a\times p))$$

The results of the hydrogen gas permeability are shown in Figure 1. In Comparative Example 1, Example 1, Example 2, and Example 3 with a low IEC, the hydrogen gas permeabilities are similar values. On the other hand, the results of the oxygen gas permeability are shown in Figure 2. In Comparative Example 1, Example 1, Example 2, and Example 3 with a low IEC, the oxygen gas permeability tends to increase with an increase of the hydrophobic unit (a) ratio ($q/(q+r)\times 100$). The oxygen gas permeability in Example 3 with the largest hydrophobic unit (a) ratio ($q/(q+r)\times 100 = 50$) is higher and about 3.2 times than that in Comparative Example 1 with no hydrophobic unit (a). The hydrogen gas permeabilities and the oxygen gas permeabilities in Example 4 and Example 5 with a high IEC are higher and respectively about 8 to 25 times and 14 to 19 times than those in Example 1, Example 2, and Example 3 with a low IEC.

<Anion conductivity>

The hydroxide ion conductivity was measured for the membranes of the anion exchange resins obtained in the Examples and the Comparative Examples. Specifically, the membranes of the anion exchange resins obtained in the Examples and the Comparative Examples were cut into a piece having a width of 1 cm and a length of 4 cm as a measurement sample, and the sample was immersed in 1 M potassium hydroxide aqueous solution (80°C) for 48 hours to form the hydroxide ion type. After the sample was pulled up from 1 M potassium hydroxide aqueous solution (80°C) and was washed with degassed pure water, the measurement of the hydroxide ion conductivity was performed by four-terminal method using alternating current (300 mV, 10-100000 Hz) in the degassed pure water. Solartolon 1255B/1287 was used as the apparatus for the measurement, and a gold wire having a diameter of 1 mm was used as the probe. The hydroxide ion conductivity $\sigma$ ($S\cdot cm^{-1}$) was calculated by the following equation from the distance between probes L (1 cm), the impedance Z ($\Omega$), and the cross-sectional area of the membrane A ($cm^2$).

$$\sigma = (L/Z) \times 1/A$$

The results are shown in Figure 3. In Comparative Example 1, Example 1, Example 2, and Example 3 with a low IEC, the hydroxide ion conductivities in Example 2 and Example 3 with a large hydrophobic unit (a) ratio ($q/(q+r)\times 100$) are higher than that in Comparative Example 1 with no hydrophobic unit (a). The hydroxide ion conductivities in Example 4 and Example 5 with a high IEC are higher than those in Example 1 and Example 3 with a low IEC. The hydroxide ion conductivity in Example 5 with the largest hydrophobic unit (a) ratio ($q/(q+r)\times 100 = 50$) is higher and about two times than that in Comparative Example 2 with no hydrophobic unit (a).

<Water uptake>

The water uptake was measured for the membranes of the anion exchange resins obtained in the Examples and the Comparative Examples. Specifically, the membranes of the anion exchange resins obtained in the Examples and the Comparative Examples were cut into a piece having a width of 1 cm and a length of 4 cm as a measurement sample, and the sample was immersed in 1 M potassium hydroxide aqueous solution (80°C) for 48 hours to form the hydroxide ion type. The water uptake (%) was calculated by the following equation from the mass of the water-containing membrane $W_{wet}$ (g) and the mass of the dry membrane $W_{dry}$ (g).

$$\text{water uptake (\%)} = ((W_{wet}-W_{dry})/W_{dry})\times 100$$

$W_{wet}$ was determined by washing the sample pulled up from 1 M potassium hydroxide solution (80°C) with degassed pure water, by immersing the sample in pure water for 24 hours or longer, by wiping off the water droplets on the sample surface with a tissue, by quickly transferring the sample to a preweighed sample tube bottle with a lid on, by weighing the sample, and by calculating the difference. $W_{dry}$ was determined by drying the water-containing under vacuum overnight (50°C), by quickly transferring the sample to a preweighed sample tube bottle with a lid on, by weighing the sample, and by calculating the difference.

The results are shown in Figure 4. In Comparative Example 1, Example 1, Example 2, and Example 3 with a low IEC, the water uptake tends to decrease with an increase of the hydrophobic unit (a) ratio ($q/(q+r)\times100$). The water uptake in Example 3 with the largest hydrophobic unit (a) ratio ($q/(q+r)\times100 = 50$) is lower and about 1/2 time lower than that in Comparative Example 1 with no hydrophobic unit (a). In Comparative Example 2, Example 4, and Example 5 with a high IEC, the water uptake also tends to decrease with an increase of the hydrophobic unit (a) ratio ($q/(q+r)\times100$). The water uptake in Example 5 with the largest hydrophobic unit (a) ratio ($q/(q+r)\times100 = 50$) is lower and about 1/3 time than that in Comparative Example 2 with no hydrophobic unit (a).

As described above, it can be found that the anion exchange resins obtained in the Examples have excellent electrical properties (high anion conductivity) and chemical properties (high gas permeability and low water uptake property) than those of the anion exchange resins obtained in the Comparative Examples.

This specification discloses at least the following inventions.

[1] An anion exchange resin, comprising:

a divalent hydrophobic group (a) comprising a bisphenol residue represented by following formula (1);
a divalent hydrophobic group (b) being composed of a singular aromatic ring, or being composed of a plurality of aromatic rings which are bonded to each other via a divalent hydrocarbon group, a divalent silicon-containing group, a divalent nitrogen-containing group, a divalent phosphorus-containing group, a divalent oxygen-containing group, a divalent sulfur-containing group, or carbon-carbon bond; and
a divalent hydrophilic group being composed of a singular aromatic ring, or being composed of a plurality of aromatic rings which are bonded to each other via a linking group and/or carbon-carbon bond, wherein the linking group is a divalent hydrocarbon group, a divalent silicon-containing group, a divalent nitrogen-containing group, a divalent phosphorus-containing group, a divalent oxygen-containing group, or a divalent sulfur-containing group, and at least one of the linking group or the aromatic ring is bonded to an anion exchange group via a divalent saturated hydrocarbon group having a carbon number of 2 or more;
wherein the anion exchange resin comprises:

a hydrophobic unit (a) being composed of the hydrophobic group (a) alone, or being composed of a plurality of the hydrophobic groups (a) repeated via ether bond, thioether bond, or carbon-carbon bond;
a hydrophobic unit (b) being composed of the hydrophobic group (b) alone, or being composed of a plurality of the hydrophobic groups (b) repeated via ether bond, thioether bond, or carbon-carbon bond; and
a hydrophilic unit being composed of the hydrophilic group alone, or being composed of a plurality of the hydrophilic groups repeated via ether bond, thioether bond, or carbon-carbon bond; and
wherein the hydrophobic unit (a), the hydrophobic unit (b), and the hydrophilic unit are bonded via ether bond, thioether bond, or carbon-carbon bond.

[2] The anion exchange resin according to [1],
wherein the hydrophobic group (a) comprises a bisphenol residue represented by the above formula (1').
[3] The anion exchange resin according to [1] or [2],
wherein the hydrophobic group (b) comprises a bisphenol residue represented by the above formula (2).

[4] The anion exchange resin according to [3],
wherein the hydrophobic group (b) comprises a bisphenol residue represented by the above formula (2').
[5] The anion exchange resin according to [1] or [2],
wherein the hydrophobic group (b) comprises a bisphenol residue represented by the above formula (3).
[6] The anion exchange resin according to [5],
wherein the hydrophobic group (b) comprises a bisphenol residue represented by the above formula (3').
[7] The anion exchange resin according to any one of [1] to [6],
wherein the hydrophilic group is composed of a singular polycyclic compound, or is composed of a plurality of polycyclic compounds which are bonded to each other via a linking group and/or carbon-carbon bond, wherein the linking group is a divalent hydrocarbon group, a divalent silicon-containing group, a divalent nitrogen-containing group, a divalent phosphorus-containing group, a divalent oxygen-containing group, or a divalent sulfur-containing group, and at least one of the linking group or the polycyclic compound is bonded to an anion exchange group via a divalent saturated hydrocarbon group having a carbon number of 2 or more.
[8] The anion exchange resin according to [7],
wherein the hydrophilic group is a fluorene residue represented by the above formula (4).
[9] An electrolyte membrane, comprising an anion exchange resin according to any one of [1] to [8].
[10] A binder for forming an electrode catalyst layer, comprising an anion exchange resin according to any one of [1] to [8].
[11] A battery electrode catalyst layer, comprising a binder for forming an electrode catalyst layer according to [10].

## Claims

**1.** An anion exchange resin, comprising:

a divalent hydrophobic group (a) comprising a bisphenol residue represented by following formula (1);
a divalent hydrophobic group (b) being composed of a singular aromatic ring, or being composed of a plurality of aromatic rings which are bonded to each other via a divalent hydrocarbon group, a divalent silicon-containing group, a divalent nitrogen-containing group, a divalent phosphorus-containing group, a divalent oxygen-containing group, a divalent sulfur-containing group, or carbon-carbon bond; and
a divalent hydrophilic group being composed of a singular aromatic ring, or being composed of a plurality of aromatic rings which are bonded to each other via a linking group and/or carbon-carbon bond, wherein the linking group is a divalent hydrocarbon group, a divalent silicon-containing group, a divalent nitrogen-containing group, a divalent phosphorus-containing group, a divalent oxygen-containing group, or a divalent sulfur-containing group, and at least one of the linking group or the aromatic ring is bonded to an anion exchange group via a divalent saturated hydrocarbon group having a carbon number of 2 or more;
wherein the anion exchange resin comprises:

a hydrophobic unit (a) being composed of the hydrophobic group (a) alone, or being composed of a plurality of the hydrophobic groups (a) repeated via ether bond, thioether bond, or carbon-carbon bond;
a hydrophobic unit (b) being composed of the hydrophobic group (b) alone, or being composed of a plurality of the hydrophobic groups (b) repeated via ether bond, thioether bond, or carbon-carbon bond; and
a hydrophilic unit being composed of the hydrophilic group alone, or being composed of a plurality of the hydrophilic groups repeated via ether bond, thioether bond, or carbon-carbon bond; and
wherein the hydrophobic unit (a), the hydrophobic unit (b), and the hydrophilic unit are bonded via ether bond, thioether bond, or carbon-carbon bond.

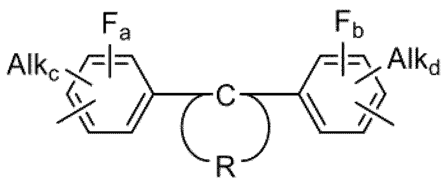

(1)

(In the formula, Alk are same or different from each other and represent an alkyl group or an aryl group; R represents a divalent hydrocarbon group forming an alicyclic structure; and a, b, c, and d are same or different from each other and represent an integer of 0 to 4.)

**2.** The anion exchange resin according to claim 1,
wherein the hydrophobic group (a) comprises a bisphenol residue represented by following formula (1').

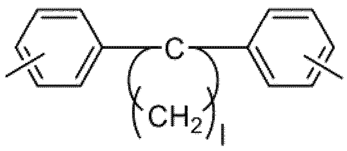

(1')

(In the formula, l represents an integer of 2 or more.)

**3.** The anion exchange resin according to claim 1,
wherein the hydrophobic group (b) comprises a bisphenol residue represented by following formula (2).

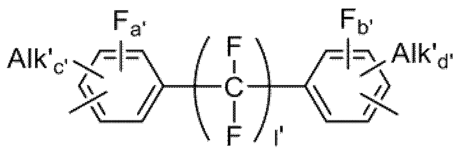

(2)

(In the formula, Alk' are same or different from each other and represent an alkyl group or an aryl group; a', b', c', and d' are same or different from each other and represent an integer of 0 to 4; and l' represents an integer of 1 or more.)

**4.** The anion exchange resin according to claim 3,
wherein the hydrophobic group (b) comprises a bisphenol residue represented by following formula (2').

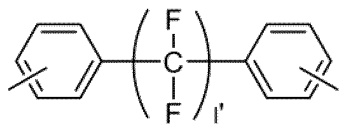

(2')

(In the formula, l' represents an integer of 1 or more.)

**5.** The anion exchange resin according to claim 1,
wherein the hydrophobic group (b) comprises a bisphenol residue represented by following formula (3).

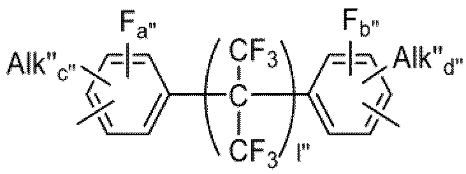

(3)

(In the formula, Alk" are same or different from each other and represent an alkyl group or an aryl group; a", b", c", and d" are same or different from each other and represent an integer of 0 to 4; and l" represents an integer of 1 or more.)

**6.** The anion exchange resin according to claim 5,
wherein the hydrophobic group (b) comprises a bisphenol residue represented by following formula (3').

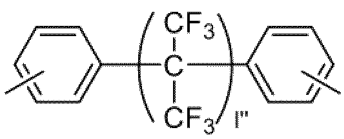

(3')

(In the formula, l" represents an integer of 1 or more.)

**7.** The anion exchange resin according to claim 1,

wherein the hydrophilic group is composed of a singular polycyclic compound, or is composed of a plurality of polycyclic compounds which are bonded to each other via a linking group and/or carbon-carbon bond, wherein the linking group is a divalent hydrocarbon group, a divalent silicon-containing group, a divalent nitrogen-containing group, a divalent phosphorus-containing group, a divalent oxygen-containing group, or a divalent sulfur-containing group, and at least one of the linking group or the polycyclic compound is bonded to an anion exchange group via a divalent saturated hydrocarbon group having a carbon number of 2 or more.

**8.** The anion exchange resin according to claim 7,
wherein the hydrophilic group is a fluorene residue represented by following formula (4).

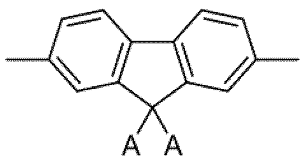

(4)

(In the formula, A are same or different from each other and represent an anion exchange group-containing group or an anion exchange group-containing cyclic structure.)

**9.** An electrolyte membrane, comprising an anion exchange resin according to any one of claims 1 to 8.

**10.** A binder for forming an electrode catalyst layer, comprising an anion exchange resin according to any one of claims 1 to 8.

**11.** A battery electrode catalyst layer, comprising a binder for forming an electrode catalyst layer according to claim 10.

FIG. 1

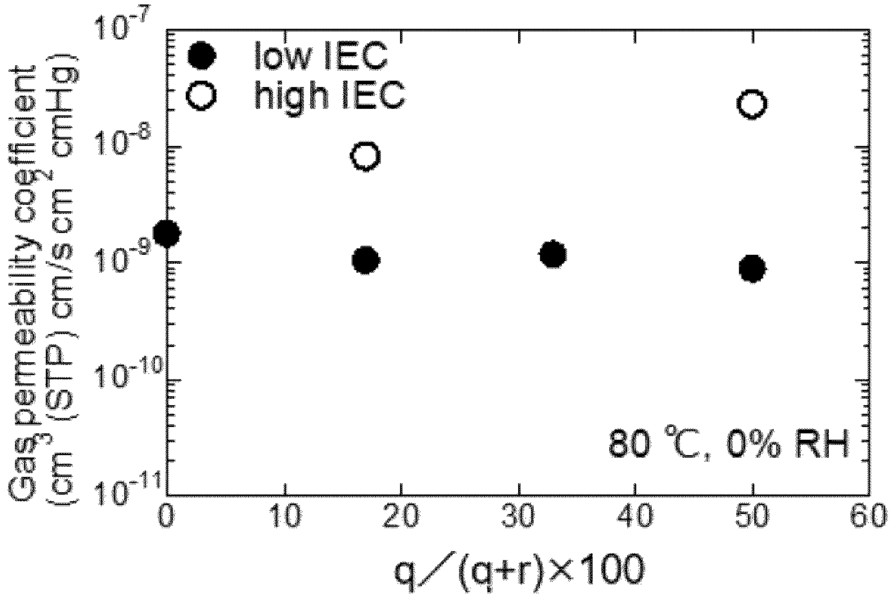


Fig.1

FIG. 2

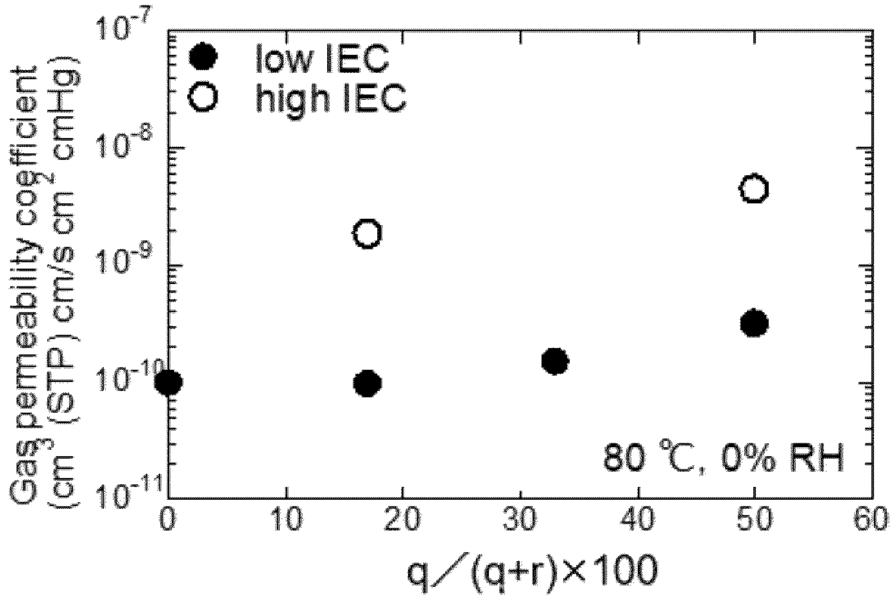


Fig.2

FIG. 3

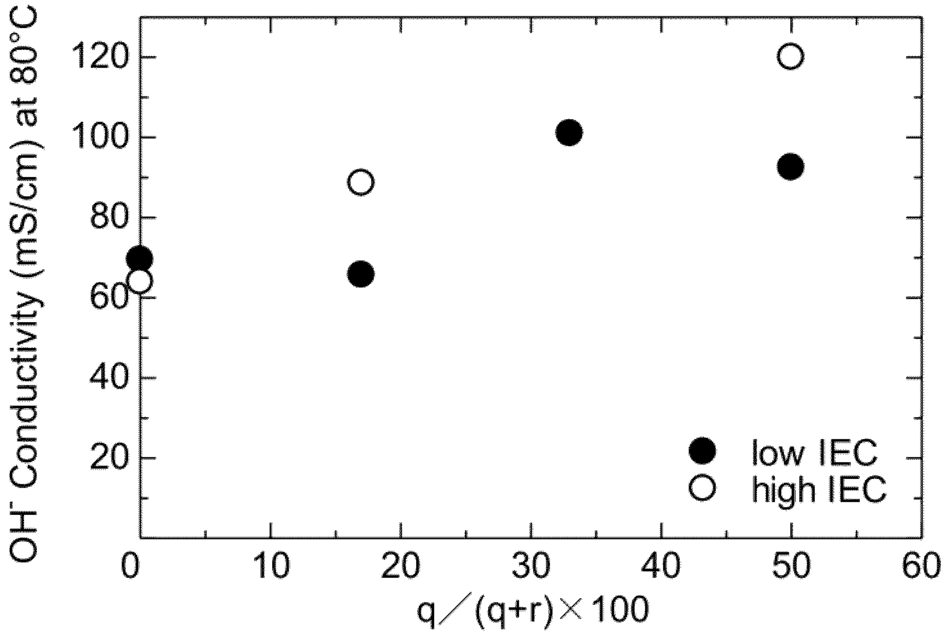


Fig.3

FIG. 4

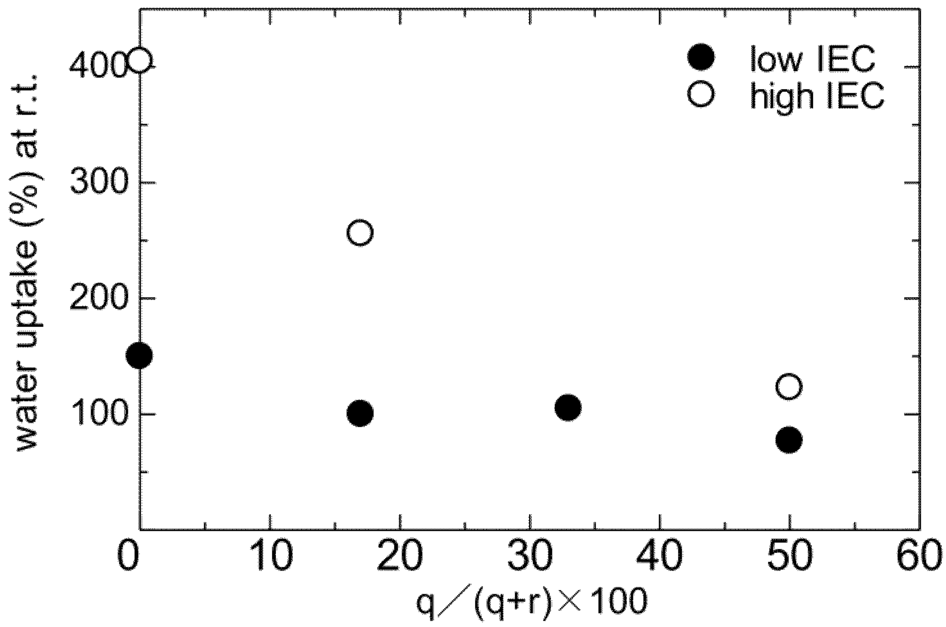


Fig.4

| INTERNATIONAL SEARCH REPORT | International application No. PCT/JP2023/023786 |
|---|---|

**A. CLASSIFICATION OF SUBJECT MATTER**

***C08G 83/00***(2006.01)i; ***C08G 61/02***(2006.01)i; ***C08J 5/22***(2006.01)i; ***H01B 1/06***(2006.01)i; ***H01M 4/86***(2006.01)i; ***H01M 8/10***(2016.01)i; ***H01M 8/102***(2016.01)i; ***H01M 8/1039***(2016.01)i
FI: C08G83/00; C08J5/22 106; H01B1/06 A; H01M8/10 101; H01M8/102; H01M8/1039; H01M4/86 B; C08G61/02

According to International Patent Classification (IPC) or to both national classification and IPC

**B. FIELDS SEARCHED**

Minimum documentation searched (classification system followed by classification symbols)

C08G83/00; C08G61/02; C08J5/22; H01B1/06; H01M4/86; H01M8/10; H01M8/102; H01M8/1039

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2022-24326 A (UNIV YAMANASHI) 09 February 2022 (2022-02-09) | 1-11 |
| A | JP 2005-232315 A (JSR CORP) 02 September 2005 (2005-09-02) | 1-11 |
| A | JP 2017-61583 A (UNIV YAMANASHI) 30 March 2017 (2017-03-30) | 1-11 |
| A | JP 2022-18683 A (UNIV YAMANASHI) 27 January 2022 (2022-01-27) | 1-11 |
| A | CN 113801300 A (HUIZHOU YIWEI NEW ENERGY RESEARCH INSTITUTE) 17 December 2021 (2021-12-17) | 1-11 |
| A | JP 2019-23258 A (UNIV YAMANASHI) 14 February 2019 (2019-02-14) | 1-11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 August 2023** | **12 September 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/023786**

| Patent document cited in search report | Publication date (day/month/year) | Patent family member(s) | Publication date (day/month/year) |
|---|---|---|---|
| JP 2022-24326 A | 09 February 2022 | CN 115916864 A | |
| JP 2005-232315 A | 02 September 2005 | (Family: none) | |
| JP 2017-61583 A | 30 March 2017 | US 2018/0265626 A1 | |
| JP 2022-18683 A | 27 January 2022 | (Family: none) | |
| CN 113801300 A | 17 December 2021 | (Family: none) | |
| JP 2019-23258 A | 14 February 2019 | US 2019/0027767 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019023258 A